# EUROPEAN PATENT APPLICATION

(11) **EP 4 757 473 A1**
(43) Date of publication of application: **10.06.2026**
(21) Application number: 23947127.9
(22) Date of filing: 02.08.2023
(51) Int. Cl.: H04W 72/25

(54) **SIDELINK COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); DING, Yi, Dongguan, Guangdong 523860 (CN)
(74) Representative: RGTH
(86) International application number: PCT/CN2023/110851
(87) International publication number: WO 2025/025179

(57) **Abstract**

The present application relates to a sidelink communication method and a device. The sidelink communication method comprises: a first communication device receiving first indication information sent by a second communication device, wherein the first indication information is used for activating or deactivating one or more first carriers, or the first indication information is used for indicating that one or more first carriers are dormant carriers or activated carriers, or the first indication information is used for indicating that one or more first carriers are activated or deactivated, and the first carriers are carriers for sidelink transmission. In the embodiments of the present application, a sidelink carrier is activated or deactivated on the basis of indication information or a timer, such that the number of carriers for sidelink transmission can be flexibly configured.

## Description

### TECHNICAL FIELD

The present application relates to the field of communications, and more particularly, to a sidelink communication method and a device.

### BACKGROUND

In a sidelink multicarrier system, sidelink transmission supports multiple carriers, the receiver does not know which carrier or carriers the transmitter will use for sidelink transmission. Therefore, the receiver needs to perform detection on the multiple carriers, such as sidelink control information (SCI) monitoring or SCI detection. However, the transmitter may only transmit data on a single carrier, which may result in energy waste.

### SUMMARY

Embodiments of the present application provide a sidelink communication method that allows for flexible configuration of carriers used for sidelink transmission.

The embodiments of the present application provide a sidelink communication method, including:
a first communication device receiving first indication information transmitted by a second communication device, where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

The embodiments of the present application provide a sidelink communication method, including:
a second communication device transmitting first indication information to a first communication device, where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

The embodiments of the present application provide a sidelink communication method, including:
a first communication device determining whether a first carrier is an active carrier or a dormant carrier based on a timer.

The embodiments of the present application provide a first communication device, including:
a receiving unit, configured to receive first indication information transmitted by a second communication device, where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

The embodiments of the present application provide a second communication device, including:
a transmitting unit, configured to transmit first indication information to a first communication device, where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

The embodiments of the present application provide a first communication device, including:
a processing unit, configured to determine whether a first carrier is an active carrier or a dormant carrier based on a timer.

The embodiments of the present application provide a communication device, including: a transceiver, a processor, and a memory. The memory is configured to store a computer program, the transceiver is configured to communicate with another device, and the processor is configured to call the computer program stored in the memory and run the computer program, to enable the communication device to perform the above-mentioned sidelink communication method.

The embodiments of the present application provide a chip, configured to implement the above-mentioned sidelink communication method.

Specifically, the chip includes: a processor, configured to call a computer program from a memory and run the computer program, to enable a device equipped with the chip to perform the above-mentioned sidelink communication method.

The embodiments of the present application provide a computer-readable storage medium, configured to store a computer program, where the computer program, when executed by a device, enables the device to perform the above-mentioned sidelink communication method.

The embodiments of the present application provide a computer program product, including computer program instructions, where the computer program instructions enable a computer to perform the above-mentioned sidelink communication method.

The embodiments of the present application provide a computer program, where the computer program, when executed on a computer, enables the computer to perform the above-mentioned sidelink communication method.

In the embodiments of the present application, a carrier used for sidelink transmission may be flexibly configured based on indication information or a timer.

### BRIEF DESCRIPTION OF THE DRAWINGS

FIG. 1 is a schematic diagram of sidelink communication in network coverage according to the embodiments of the present application.
FIG. 2 is a schematic diagram of sidelink communication in partial network coverage according to the embodiments of the present application.
FIG. 3 is a schematic diagram of sidelink communication out of network coverage according to the embodiments of the present application.
FIG. 4 is a schematic diagram of a central control node according to the embodiments of the present application.
FIG. 5 is a schematic diagram of unicast according to the embodiments of the present application.
FIG. 6 is a schematic diagram of groupcast according to the embodiments of the present application.
FIG. 7 is a schematic diagram of broadcast according to the embodiments of the present application.
FIGS. 8a, 8b and 8c are each a schematic diagram of a slot structure in new radio vehicle-to-anything (NR-V2X).
FIG. 9 is a schematic flowchart of a sidelink communication method according to an embodiment of the present application.
FIG. 10 is a schematic flowchart of a sidelink communication method according to another embodiment of the present application.
FIG. 11 is a schematic flowchart of a sidelink communication method according to yet another embodiment of the present application.
FIG. 12 is a schematic flowchart of a sidelink communication method according to still yet another embodiment of the present application.
FIG. 13 is a schematic flowchart of a sidelink communication method according to still yet another embodiment of the present application.
FIG. 14 is a schematic flowchart of a sidelink communication method according to still yet another embodiment of the present application.
FIG. 15 is a schematic flowchart of a sidelink communication method according to still yet another embodiment of the present application.
FIG. 16 is a schematic flowchart of a sidelink communication method according to still yet another embodiment of the present application.
FIGS. 17a and 17b are each a flowchart of an example based on indication information.
FIG. 17c is a schematic diagram of multi-carrier transmission controlled based on indication information in a unicast communication scenario.
FIG. 17d is a flowchart of an example based on a timer and a counter.
FIG. 17e is a schematic diagram of multi-carrier transmission controlled based on a timer and a counter in a unicast communication scenario.
FIG. 18 is a schematic block diagram of a first communication device according to an embodiment of the present application.
FIG. 19 is a schematic block diagram of a first communication device according to another embodiment of the present application.
FIG. 20 is a schematic block diagram of a second communication device according to an embodiment of the present application.
FIG. 21 is a schematic block diagram of a second communication device according to another embodiment of the present application.
FIG. 22 is a schematic block diagram of a first communication device according to yet another embodiment of the present application.
FIG. 23 is a schematic block diagram of a first communication device according to still yet another embodiment of the present application.
FIG. 24 is a schematic block diagram of a communication device according to the embodiments of the present application.
FIG. 25 is a schematic block diagram of a chip according to the embodiments of the present application.
FIG. 26 is a schematic block diagram of a communication system according to the embodiments of the present application.

### DETAILED DESCRIPTION

Technical solutions in the embodiments of the present application will be described below in conjunction with drawings in the embodiments of the present application.

The technical solutions of the embodiments of the present application may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a sidelink on unlicensed spectrum (SL-U) system, a non-terrestrial communication network (non-terrestrial network, NTN) system, a universal mobile telecommunication system (UMTS), a wireless local area network (WLAN), a wireless fidelity (WiFi), a 5th-generation (5G) system, or other communication systems.

Generally speaking, traditional communication systems support a limited number of connections, which is also easy to implement. However, with the development of the communication technologies, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems as well.

In an implementation, the communication system in the embodiments of the present application may be applied to a carrier aggregation (CA) scenario, a dual connectivity (DC) scenario, or a standalone (SA) network deployment scenario.

In an implementation, the communication system in the embodiments of the present application may be applied to an unlicensed spectrum, where the unlicensed spectrum may also be considered as a shared spectrum. Alternatively, the communication system in the embodiments of the present application may be applied to a licensed spectrum, where the licensed spectrum may be considered as an unshared spectrum.

In the embodiments of the present application, various embodiments are described in conjunction with a network device and a terminal device. The terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, or may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, including indoor or outdoor, handheld, wearable or vehicle-mounted; alternatively, the terminal device may be deployed on water (e.g., on a steamship); alternatively, the terminal device may be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement all or part of functions without relying on smart phones, such as smart watches or smart glasses; as well as devices that only focus on a certain type of application function and need to be used in conjunction with other devices (e.g., a smart phone), such as various smart bracelets and smart jewelry that monitor physical signs, or the like.

In the embodiments of the present application, the network device may be a device used for communicating with a mobile device, and the network device may be an access point (AP) in a WLAN, an evolutional base station (evolutional node B, eNB or eNodeB) in an LTE, or a relay station or an access point, or an in-vehicle device, a wearable device, and a network device (gNB) in an NR network, or a network device in a future evolved PLMN network, or a network device in an NTN network, or the like.

As an example but not a limitation, in the embodiments of the present application, the network device may have mobility characteristics. For example, the network device may be a mobile device. Optionally, the network equipment may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network equipment may be a base station deployed on land, water, or other places.

In the embodiments of the present application, the network device may provide a service for a cell, and the terminal device communicates with the network device through a transmission resource (e.g., a frequency domain resource, or a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell. These small cells have characteristics of small coverage ranges and low transmission power, which are applicable for providing a data transmission service with a high speed.

It should be understood that the terms "system" and "network" are often used interchangeably herein. The term "and/or" herein is only an association relationship to describe associated objects, indicating that there may be three kinds of relationships; for example, "A and/or B" may represent three cases where: A exists alone, both A and B exist, and B exists alone. In addition, a character "/" herein generally indicates that the associated objects before and after this character are in an "or" relationship.

It should be understood that, "indicate/indicated/indicating/indication" mentioned in the embodiments of the present application may mean a direct indication or an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present application, the term "correspond/corresponding/correspondence" may mean that there is a direct correspondence or an indirect correspondence between the two, or may mean that there is an association relationship between the two, or may mean a relationship of indicating and being indicated, or a relationship of configuring and being configured, etc.

To facilitate understanding of the technical solutions of the embodiments of the present application, the related technologies of the embodiments of the present application are described below, and the following related technologies, as optional solutions, may be arbitrarily combined with the technical solutions of the embodiments of the present application, and they all fall within the protection scope of the embodiments of the present application.

### Sidelink communication in different network coverage scenarios:

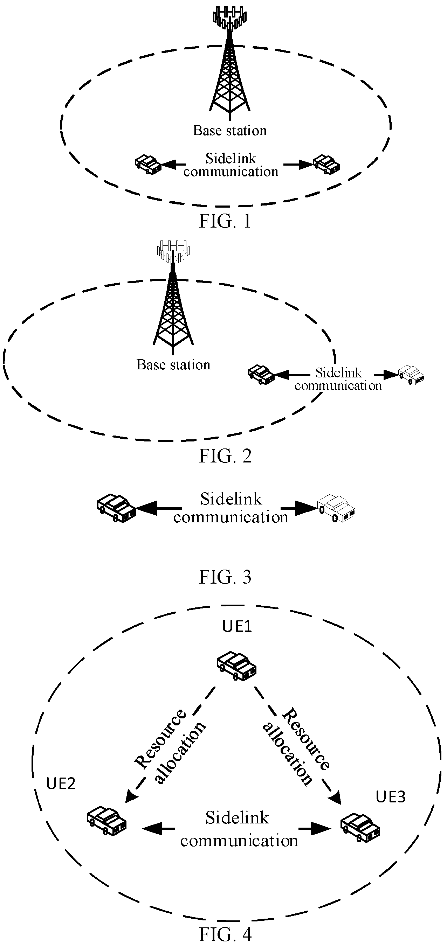

Sidelink communication, depending on the network coverage of the terminal conducting the communication, may be classified into sidelink communication in network coverage, sidelink communication in partial network coverage, and sidelink communication out of network coverage, which are shown in FIGS. 1, 2, 3, and 4, respectively.

FIG. 1: In sidelink communication in network coverage, all terminals performing sidelink communication are within the coverage area of the same base station. Therefore, all of the above terminals may perform sidelink communication based on the same sidelink configuration by receiving configuration signaling from the base station.

FIG. 2: In sidelink communication in partial network coverage, some terminals that perform sidelink communication are within the coverage area of the base station, and these terminals can receive the configuration signaling of the base station and perform sidelink communication according to the configuration of the base station. Terminals located outside the network coverage area cannot receive configuration signaling from the base station. In this scenario, the terminals outside the network coverage area will determine, based on pre-configuration information and information carried in a physical sidelink broadcast channel (PSBCH) transmitted by terminals that are within the network coverage area, sidelink configuration to perform sidelink communication.

FIG. 3: In sidelink communication out of network coverage, all terminals performing sidelink communication are located outside the network coverage area, and all the terminals determine the sidelink configuration based on the pre-configuration information to perform sidelink communication.

FIG. 4: In sidelink communication with a central control node, multiple terminals form a communication group, and this communication group has a central control node, which may also be referred to as a cluster header (CH). The central control node has at least one of the following functions: responsible for establishing communication group; managing the joining and leaving of members in the group; coordinating resources, allocating sidelink transmission resources to other terminals, receiving sidelink transmission feedback information from other terminals, and coordinating resources with other communication groups.

### D2D/V2X:

Device to device (D2D) communication is a sidelink (SL) transmission technology that adopts terminal-to-terminal communication mode, which is different from a mode where communication data is received or transmitted through base stations in the traditional cellular system. Therefore, it has high spectral efficiency and low transmission latency. Sidelink may also be referred to as a straight link. In some communication protocols, two transmission modes of a first mode and a second mode are defined.

First mode: the transmission resources of the terminal are allocated by the base station, and the terminal transmits data on the sidelink according to the resource allocated by the base station. The base station may dynamically allocate the sidelink transmission resources to the terminal, or allocate semi-static transmission resources to the terminal. As shown in FIG. 1, the terminals are located within the network coverage area, and the network allocates transmission resources to the terminals for sidelink transmission.

Second mode: the terminal selects resources from a resource pool for data transmission. As shown in FIG. 3, the terminal is located outside the cell coverage area, and the terminal autonomously selects transmission resources from the pre-configured resource pool for sidelink transmission. Alternatively, as shown in FIG. 1, the terminal may autonomously select transmission resources from the resource pool configured by the network for sidelink transmission.

### NR-V2X:

NR-V2X may adopt SL transmission mode based on NR. In NR-V2X, autonomous driving needs to be supported, which puts forward higher requirements for data interaction between vehicles, such as high throughput, low latency, high reliability, wide coverage, and flexible resource allocation.

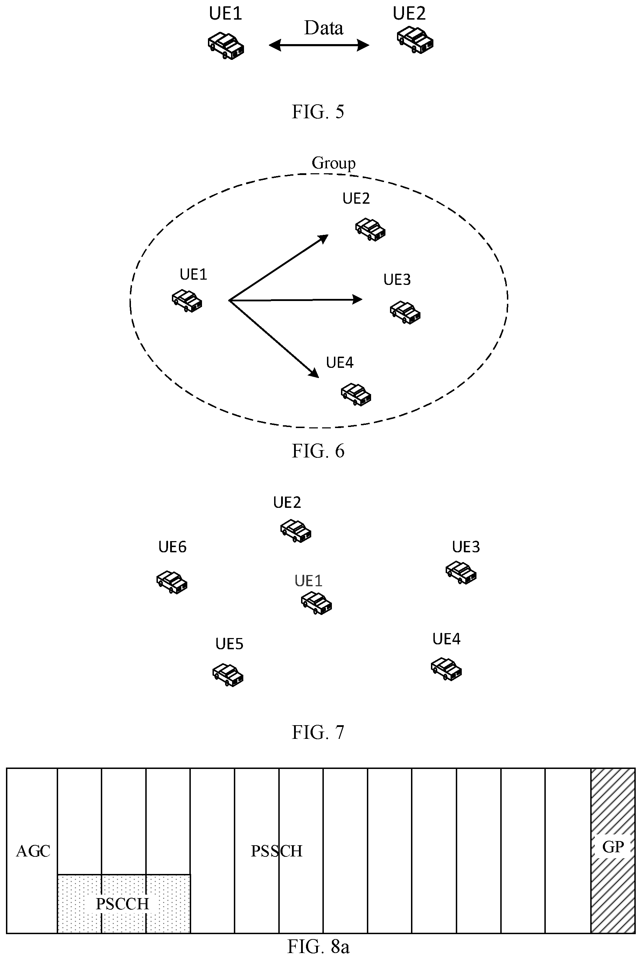

NR-V2X supports unicast, groupcast, and broadcast transmission modes. For unicast transmission, there is only one terminal at the receiving end; as shown in FIG. 5, unicast transmission are performed between UE1 and UE2. For groupcast transmission, the receiving end is implemented by all terminals in a communication group, or all terminals within a certain transmission distance; as shown in FIG. 6, UE1, UE2, UE3, and UE4 form a communication group, where UE1 transmits data, and the other terminal devices in the group are all terminals at the receiving terminals. For broadcast transmission, the receiving end is any terminal around the transmitting terminal; as shown in FIG. 7, UE1 is the transmitting terminal, and the other terminals, UE2 to UE6, around the transmitting terminal are all receiving terminals.

### NR SL system frame structure:

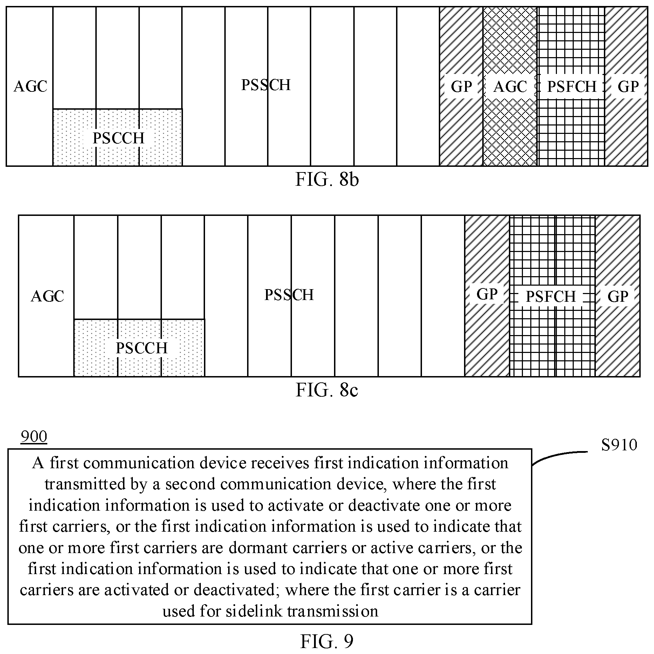

A slot structure of the NR-based sidelink system is shown in FIGS. 8a and 8b. FIG. 8a shows a slot structure excluding a physical sidelink feedback channel (PSFCH). FIG. 8b shows the slot structure including the PSFCH.

**In** the NR SL system, a physical sidelink control channel (PSCCH) occupies 2 or 3 orthogonal frequency division multiplexing (OFDM) symbols starting from the second sidelink symbol of the slot in the time domain, and occupies {10, 12, 15, 20, 25} physical resource blocks (PRBs) in the frequency domain. To reduce the complexity of blind detection of PSCCH by the UE, only one configuration of the number of PSCCH symbols and the number of PRBs may be allowed within a resource pool. In addition, since a sub-channel is the smallest granularity of a physical sidelink shared channel (PSSCH) resource allocation in the NR SL system, the number of PRBs occupied by the PSCCH must be less than or equal to the number of PRBs contained in a sub-channel within the resource pool, so as avoid additional restrictions on the selection or allocation of PSSCH resources. In the time domain, the PSSCH starts from the second sidelink symbol of the slot; the last time domain symbol in the slot is a guard period (GP) symbol, and the remaining symbols are mapped to the PSSCH. The first sidelink symbol in this slot is a repetition of the second sidelink symbol. Typically, the receiving terminal uses the first sidelink symbol as an automatic gain control (AGC) symbol, and the data on this symbol is usually not used for data demodulation. The PSSCH occupies K sub-channels in the frequency domain, and each sub-channel includes N consecutive PRBs, as shown in FIG. 8a.

In the case where the slot includes the PSFCH channel, the PSFCH occupies 2 symbols in the time domain, corresponding to the second to last and third to last symbols in the slot. The data on the two symbols is the same. The first PSFCH symbol is usually used as the AGC symbol, and the time domain symbol before the PSFCH channel is used as the GP symbol, as shown in FIG. 8b.

In the case where the slot includes a PSFCH channel, the second to last and third to last symbols in the slot are used for PSFCH channel transmission, and the time domain symbol preceding the PSFCH channel is used as the GP symbol, as shown in FIG. 8c.

### Sidelink multicarrier mechanism:

To improve the throughput of the sidelink transmission system, multi-carrier transmission may be supported on the sidelink. In LTE-based sidelink systems (LTE SL), multiple carriers may be supported for sidelink transmission to improve system transmission rate or transmission reliability. When performing sidelink transmission, the terminal needs to select a carrier; and the terminal determines the carrier corresponding to the data to be transmitted according to a correspondence relationship between the service type configured by the higher layer and the carrier. In sidelink multicarrier, carrier aggregation and packet duplication are supported.

FIG. 9 is a schematic flowchart of a sidelink communication method 900 according to an embodiment of the present application. The method may be optionally applied to the systems shown in FIGS. 1 to 7, and is not limited thereto. The method includes at least some of the following:

In S910, a first communication device receives first indication information transmitted by a second communication device. The first indication information is used to activate or deactivate one or more first carriers, or the first indication information is used to indicate that one or more first carriers are dormant carriers or active carriers, or the first indication information is used to indicate that one or more first carriers are activated or deactivated; where the first carrier is a carrier used for sidelink transmission.

In the embodiments of the present application, the first communication device may be a terminal device in a sidelink communication system. The second communication device may be another terminal device in the sidelink communication system or a network device. For example, in a sidelink multi-carrier system, sidelink transmission may support multiple carriers. By activating or deactivating the carrier through the first indication information, the first communication device, such as a terminal device, may flexibly monitor the required carrier. For example, in the case where sidelink transmission does not need to be performed on multiple carriers, the carriers may be deactivated by the first indication information, so that the terminal device only needs to monitor or detect a few carriers, so as to achieve energy-saving effect. In the case where sidelink transmission needs to be performed on more carriers, the carrier may be activated by the first indication information, so that the terminal device may monitor or detect more carriers, so as to improve the throughput or reliability of sidelink transmission.

In the embodiments of the present application, activating the first carrier may also be described as: the first carrier being activated, the first carrier being an active carrier, waking up the first carrier, the first carrier being a non-dormant carrier, or the first carrier exiting a dormant state. In this case, the first communication device does not need to perform sidelink control information (SCI) monitoring or physical sidelink control channel (PSCCH) monitoring on the first carrier, or the first communication device does not need to detect sidelink transmissions on the first carrier.

In the embodiments of the present application, deactivating the first carrier may also be described as: the first carrier being deactivated, the first carrier being a deactivated carrier, dormanting the first carrier, the first carrier being a dormant carrier, or the first carrier entering a dormant state. In this case, the first communication device needs to perform sidelink control information (SCI) monitoring or physical sidelink control channel (PSCCH) monitoring on the first carrier, or the first communication device needs to detect sidelink transmissions on the first carrier.

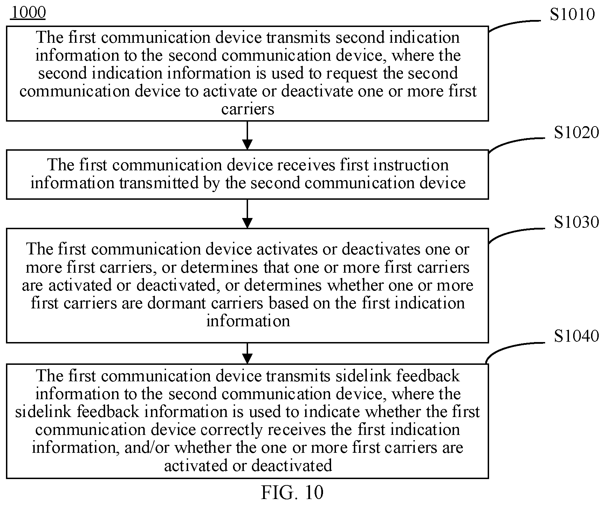

FIG. 10 is a schematic flowchart of a sidelink communication method 1000 according to another embodiment of the present application. The method may include one or more features of the methods described above. In an implementation, the method further includes the following steps.

In S1010, a first communication device transmits second indication information to a second communication device, the second indication information is used to request the second communication device to activate or deactivate one or more first carriers.

In the embodiments of the present application, after the first communication device transmits the second indication information to the second communication device, the second communication device may transmit the first indication information to the first communication device. The first indication information may be acknowledgement (ACK) or negative acknowledgement (NACK) information of the second indication information, which is used to affirm or deny the request of the first communication device. The first communication device may determine whether the first carrier is activated or deactivated based on the ACK/NACK of the first indication information.

In the embodiments of the present application, the second indication information is used to request the second communication device to activate or deactivate one or more first carriers. It may be described as a process that the second indication information is used for the second communication device, such as a second terminal device, to determine carrier information to be activated or deactivated, the second communication device may determine an activated or deactivated carrier based on the second indication information, and transmit the first indication information to the first communication device to indicate the carrier information that needs to be activated or deactivated. Alternatively, it may be described as a process that the second indication information is used to indicate the carrier information (e.g., first carrier information) that needs to be activated or deactivated to the second communication device, such as a second terminal device, and the second communication device transmits first indication information (for example, the first indication information including ACK or NACK information) to the first communication device based on the second indication information, and then, the first communication device determines whether the first carrier is activated or deactivated based on the first indication information.

In the embodiments of the present application, the second indication information is used to request the second communication device to activate or deactivate one or more first carriers. The second communication device may reply whether to agree to activate or deactivate the one or more first carriers via the first indication information.

For example, the activated carrier information includes a carrier CC1, a carrier CC2, a carrier CC3, and a carrier CC4. If the second indication information transmitted by the first communication device requests the second communication device to deactivate the carrier CC1 and the carrier CC2, the first indication information received by the first communication device may include acknowledgment (ACK) information or negative acknowledgment (NACK) information. If the first indication information indicates the ACK information, the first communication device may deactivate the carrier CC1 and the carrier CC2, and then use the carrier CC3 and the carrier CC4 to perform sidelink transmission. If the first indication information indicates the NACK information, the first communication device cannot deactivate the carrier CC1 and carrier CC2, but can still use the carrier CC1, the carrier CC2, the carrier CC3, and the carrier CC4 to perform sidelink transmission.

In an implementation, the second indication information is used to indicate at least one of:
indication information for activating or deactivating the one or more first carriers; or
carrier information of the one or more first carriers.

In the embodiments of the present application, the second indication information may explicitly or implicitly indicate to activate or deactivate one or more first carriers. For example, the second indication information includes indication information for activating one or more first carriers, and/or includes carrier information of the one or more first carriers. In this case, the second indication information may explicitly activate the one or more first carriers, or the second indication information may implicitly deactivate other carriers except the one or more first carriers. For another example, the second indication information includes indication information for deactivating one or more first carriers, and/or includes carrier information of the one or more first carriers. In this case, the second indication information may explicitly deactivate the one or more first carriers, or the second indication information may implicitly activate other carriers except the one or more first carriers.

For example, if the carrier CC1, the carrier CC2, the carrier CC3, and the carrier CC4 are all in a dormant state, and the first communication device transmits the second indication information to the second communication device to indicate to activate the carrier CC1 and the carrier CC2, and the second communication device reply via the first indication information that the carrier CC1 is activated while the carrier CC2 is not activated, then the first communication device activates the carrier CC1 but does not activate the carrier CC2. For another example, the carrier CC1, the carrier CC2, the carrier CC3, and the carrier CC4 are all in an active state, and the first communication device transmits the second indication information to the second communication device to indicate to deactivate the carrier CC1 and the carrier CC2. In this case, if the second communication device reply via the first indication information that the carrier CC3 and carrier CC4 are activated, then the first communication device deactivates the carrier CC1 and carrier CC2; if the second communication device reply via the first indication information that the carrier CC1, carrier CC3, and carrier CC4 are activated, then the first communication device deactivates the carrier CC2.

For another example, the activated carrier information includes a carrier CC1, a carrier CC2, a carrier CC3, and a carrier CC4. If the second indication information transmitted by the first communication device requests the second communication device to deactivate the carrier CC1 and the carrier CC2, the first indication information received by the first communication device may include the deactivated carrier information. If the first indication information indicates to deactivate the carrier CC1 and the carrier CC2, the first communication device may deactivate the carrier CC1 and the carrier CC2, and then perform sidelink transmission using the carrier CC3 and the carrier CC4. If the first indication information indicates to deactivate the carrier CC1, the first communication device may deactivate the carrier CC1 but cannot deactivate the carrier CC2, and then perform sidelink transmission using the carrier CC2, the carrier CC3, and the carrier CC4. If the first indication information indicates to deactivate the carrier CC3, the first communication device may deactivate the carrier CC3 but cannot deactivate the carrier CC1 and the carrier CC2, and then perform sidelink transmission using the carrier CC1, the carrier CC2, and the carrier CC4.

In an implementation, the first communication device is a first terminal device, and the second communication device is a second terminal device. The embodiments of the present application may be applied to a sidelink communication system. If the first communication device is a first terminal device, the second communication device is a second terminal device. The first terminal device may transmit the second indication information to the second terminal device. Moreover, the first terminal device may receive the first indication information from the second terminal device.

In an implementation, the first indication information is carried in sidelink control information (SCI) (e.g., first-order SCI or second-order SCI), a sidelink reference signal, a sidelink feedback control channel (PSFCH), a media access control (MAC) control element (CE), or PC5 radio resource control (PC5-RRC) signaling. The sidelink reference signal carrying the first indication information may include a demodulation reference signal (DMRS), a channel state information reference signal (CSI-RS), or a synchronization signal.

In an implementation, the second indication information is carried in sidelink control information (SCI) (e.g., first-order SCI or second-order SCI), a sidelink reference signal, a PSFCH, a MAC CE, or PC5-RRC signaling. The sidelink reference signal carrying the second indication information may include a DMRS, a CSI-RS, or a synchronization signal.

In an implementation, the method further includes the following step.

In S1020, the first communication device receives the first indication information transmitted by the second communication device. This step may refer to the relevant description in S910.

In an implementation, the method further includes the following step.

In S1030, based on the first indication information, the first communication device activates or deactivates one or more first carriers, or determines that one or more first carriers are activated or deactivated, or determines whether one or more first carriers are dormant carriers. Here, S1030 may be performed directly after S910, or S1030 may be performed after S1010 and S1020.

For example, the first communication device may currently perform sidelink transmission on M first carriers. If the first indication information indicates to deactivate N first carriers, N first carriers being deactivated, or N first carriers being dormant carriers, where the N first carriers are all or some of the M first carriers. After receiving the first indication information, the first communication device may deactivate the N first carriers of the M first carriers. The first communication device may deactivate N first carriers, determine that N carriers are deactivated, or determine that N carriers are dormant carriers, and subsequently perform sidelink transmission on M-N first carriers. If the first indication information indicates to activate N first carriers, N first carriers being activated, or N first carriers being active carriers, where the N first carriers are carriers excluding M first carriers. After receiving the first indication information, the first communication device may activate N first carriers, determine that N carriers are activated, determine that N carriers are woken up, or determine that N carriers exit the dormant state, and subsequently perform sidelink transmission on M+N first carriers.

In an implementation, based on the first indication information, the first communication device deactivating the one or more first carriers, or determining that the one or more first carriers are deactivated, or determining that the one or more first carriers are dormant carriers, includes at least one of:
the first communication device does not expect to receive sidelink information transmitted by the second communication device on the first carrier after a first time; where the sidelink information may include a PSCCH, a PSSCH, a PSFCH, a sidelink-synchronization signal block (S-SSB), or SCI; or
the first communication device does not expect to monitor sidelink control information transmitted by the second communication device on the first carrier after a first time;
where the first time is determined based on a second time and a first duration, and the second time is determined based on a time when the first communication device receives the first indication information. In an implementation, the second time is determined based on a start time or end time of a slot in which the first indication information is located. For example, the second time is equal to the start time or end time of the slot in which the first indication information is located.

In the embodiments of the present application, after the first indication information and then after a certain duration, the first communication device activates the one or more first carriers, or determines that the one or more first carriers are deactivated, or determines that the one or more first carriers are dormant carriers. For example, the time when the first communication device receives the first indication information is T0, and the second time obtained based on T0 is T2. T2 may be equal to T0, or may be calculated based on T0. For example, T2 = T0 + a, where a is a preset value or a value determined based on pre-configuration information and network configuration information. The first time for activating the one or more first carriers may be determined based on the second time and the first duration. For example, the first duration may be Td1, and the first time T1 is expressed as: T1 = T2 + Td1. For another example, the first time T1 is expressed as: T1 = T2 + Td1 + b, where b is a preset value or a value determined based on pre-configuration information and network configuration information.

For example, after receiving the first indication information for deactivating the first carrier, the first communication device, such as a first terminal device, determines the first time based on a time when the first indication information is received, and does not expect to receive the sidelink information transmitted by the second communication device, such as a second terminal device, on the first carrier after the first time T1, or to monitor the sidelink control information transmitted by the second terminal device on the first carrier.

In an implementation, based on the first indication information, the first communication device activating the one or more first carriers, or determining that the one or more first carriers are activated, or determining that the one or more first carriers are not dormant carriers, or waking up the one or more first carriers, includes at least one of:
the first communication device receiving the sidelink information transmitted by the second communication device on the first carrier after a third time; where the sidelink information may include a PSCCH, a PSSCH, a PSFCH, an S-SSB or SCI;
the first communication device monitoring the sidelink control information transmitted by the second communication device on the first carrier after a third time;
the first communication device does not expect to receive the sidelink information transmitted by the second communication device on the first carrier before a third time; where the sidelink information may include a PSCCH, a PSSCH, a PSFCH, a S-SSB or SCI; or
the first communication device does not expect to monitor the sidelink control information transmitted by the second communication device on the first carrier before a third time;
where the third time is determined based on a fourth time and a second duration, and the fourth time is determined based on a time when the first communication device receives the first indication information. In an implementation, the fourth time is determined based on a start time or end time of a slot in which the first indication information is located. For example, the fourth time is equal to the start time or end time of the slot in which the first indication information is located.

In the embodiments of the present application, after receiving the first indication information and then for a certain duration, the first communication device activates the one or more first carriers, or determines that the one or more first carriers are activated, or determines that the one or more first carriers are not dormant carriers, or wakes up the one or more first carriers. For example, the time when the first communication device receives the first indication information is T5, and the fourth time obtained based on T5 is T4. T4 may be equal to T5 or may be calculated based on T5. For example, T4 = T5 + c, where c is a preset value or a value determined based on pre-configuration information and network configuration information. The third time for activating the one or more first carriers may be determined based on the fourth time and the second duration. For example, the second duration may be Td2, and the third time T3 is expressed as: T3 = T4 + Td2. For example, the third time T3 is expressed as: T3 = T4 + Td2 + d, where d is a preset value or a value determined based on pre-configuration information and network configuration information.

For example, after receiving the first indication information for activating the first carrier, the first communication device, such as a first terminal device, determines a third time based on a time when the first indication information is received, and then starts receiving the sidelink information transmitted by the second communication device on the first carrier from the third time T3 or starts monitoring the sidelink control information transmitted by the second communication device on the first carrier. Furthermore, before the third time T3, the first communication device does not receive the sidelink information transmitted by the second communication device on the first carrier, or does not monitor the sidelink control information transmitted by the second communication device on the first carrier.

In an implementation, the first duration and/or the second duration is determined based on at least one of: protocol predefined information, pre-configuration information, network configuration information, indication information of the first communication device, indication information of the second communication device, and a processing time of a terminal device. For example, the first communication device may receive indication information and configuration information for indicating the first duration and/or the second duration from the second communication device. The first duration and the second duration may be indicated by the same piece of information, or may be indicated independently. For example, if the first communication device is a terminal device, the terminal device may obtain the first time T1, expressed as: T1 = T0 + Tp, to start deactivating the one or more first carriers based on the processing time Tp of the terminal device itself and the time T0 when the terminal device receives the first indication information; alternatively, the terminal device may obtain the third time T3, expressed as: T3 = T5 + Tp, to start activating the one or more first carriers based on the processing time Tp of the terminal device itself and the time T3 when the terminal device receives the first indication information.

In an implementation, in the case where the first indication information is carried in SCI or a MAC CE, the method further includes:
S1040, the first communication device transmitting sidelink feedback information to the second communication device, the sidelink feedback information being used to indicate whether the first communication device correctly receives the first indication information, and/or whether the one or more first carriers are activated or deactivated.

In the embodiments of the present application, after receiving the first indication information carried on the SCI or the MAC CE, the first communication device may transmit first sidelink feedback information to the second communication device. The first sidelink feedback information may be carried in the PSFCH. The first sidelink feedback information may be used to indicate whether the first indication information is correctly received by the first communication device. For example, if an indicator bit, used for indicating a reception result, in the first sidelink feedback information is 1, it means that the first indication information is received correctly, and if the indicator bit is 0, it means that the first indication information is not received correctly. The values of the above-mentioned indicator bit are merely examples and not limitations; other values may also be used for indication. For example, the indicator bit being 0, 01, or 11 indicates that the first indication information is received correctly, while the indicator bit being 1, 10, or 00 indicates that the first indication information is not received correctly. For example, if the first sidelink feedback information is ACK, it means that the first indication information is received correctly; and if the first sidelink feedback information is NACK, it means that the first indication information is not received correctly.

In the embodiments of the present application, after receiving the first indication information carried on the SCI or the MAC CE, the first communication device may transmit second sidelink feedback information to the second communication device. The second sidelink feedback information may be carried in a PSFCH, SCI, or a MAC CE. The second sidelink feedback information may be used to indicate whether N first carriers indicated by the first indication information are activated or deactivated by the first communication device. For example, the first indication information transmitted by the second communication device indicates to activate N first carriers; the first communication device receives the first indication information and transmits the second sidelink feedback information to the second communication device; if an indication bit in the second sidelink feedback information is 1, it means that the above-mentioned N first carriers are activated, and if the indication bit is 0, it means that the above-mentioned N first carriers are not activated. The values of the above-mentioned indicator bit are merely examples and not limitations; other values may also be used for indication. For example, the indicator bit being 0 indicates that the above-mentioned N first carriers are activated, and the indicator bit being 1 indicates that the above-mentioned N first carriers are not activated. For another example, the above-mentioned N first carriers that need to be activated include carriers CC1 and CC2; the indicator bit being 01 indicates that the carrier CC1 is activated but the carrier CC2 is not activated, the indicator bit being 11 indicates that both the carriers CC1 and CC2 are activated, and the indicator bit being 10 indicates that the carrier CC2 is activated but the carrier CC1 is not activated.

In an implementation, the first communication device receiving the first indication information transmitted by the second communication device, includes:
the first communication device receiving the first indication information transmitted by the second communication device on a second carrier, where the second carrier is different from the first carrier, or the second carrier is one of the one or more first carriers.

For example, the first indication information indicates that the one or more first carriers that need to be activated or deactivated include carriers CC1 and CC2. The second communication device may transmit the first indication information on the carriers CC1 and/or CC2. The first communication device may receive the first indication information on the carriers CC1 and/or CC2.

For another example, the first indication information indicates that the one or more first carriers that need to be activated or deactivated include carriers CC1 and CC2. The second communication device may transmit the first indication information on a carrier CC3. The first communication device may receive the first indication information on the carrier CC3.

In an implementation, the second carrier includes at least one of:
a carrier used by the first communication device and second communication device when performing sidelink transmission using a single carrier;
a carrier used for PC5-RRC signaling transmission; or
a carrier on which direct communication request (DCR) information is located.

For example, the carrier CC3 is a carrier used by the first communication device and the second communication device when performing sidelink transmission using a single carrier. The second communication device may transmit the first indication information through the carrier CC3. If the first indication information indicates to activate the carriers CC1 and CC2, then after the first communication device successfully activates the carriers CC1 and CC2, the sidelink transmission may be performed between the first communication device and the second communication device by using the carriers CC1, CC2 and CC3.

For another example, if the carrier used for PC5-RRC signaling transmission includes a carrier CC4, the first indication information may be transmitted on the carrier CC4. If the first indication information indicates to activate the carriers CC1 and CC2, then after the first communication device successfully activates the carriers CC1 and CC2, the sidelink transmission may be performed between the first communication device and the second communication device by using the carriers CC1, CC2 and CC4. Furthermore, if the first indication information transmitted on the carrier CC4 indicates to activate the carrier CC2, then after the first communication device successfully activates the carrier CC2, the sidelink transmission may be performed between the first communication device and the second communication device by using the carriers CC1 and CC4.

For yet another example, if the carrier on which the DCR information is located includes a carrier CC6, the first indication information may be transmitted on the carrier CC6. If the first indication information indicates to activate the carriers CC1 and CC2, then after the first communication device successfully activates the carriers CC1 and CC2, the sidelink transmission may be performed between the first communication device and the second communication device by using the carriers CC1, CC2 and CC6. If the first indication information indicates to activate the carriers CC1 and CC2 and deactivate the carrier CC6, then after the first communication device successfully activates the carriers CC1 and CC2 and deactivates the carrier CC6, the sidelink transmission may be performed between the first communication device and the second communication device by using the carriers CC1 and CC2.

In an implementation, the second carrier is determined by at least one of:
a carrier on which DCR information and/or DCA information is located during a unicast link establishment process;
a carrier on which PC5-S is located;
a primary carrier; or
third indication information transmitted by the first communication device or the second communication device, the third indication information being used to indicate the second carrier.

For example, if the carrier on which the DCR information is located during the unicast link establishment process is a carrier CC1, the first indication information may be transmitted on the carrier CC1. For example, if the carrier on which the DCA information is located during the unicast link establishment process is a carrier CC2, the first indication information may be transmitted on the carrier CC2. For example, if the carrier on which PC5-S is located is a carrier CC3, the first indication information may be transmitted on the carrier CC3. For example, if the carriers used for sidelink communication between the first communication device and the second communication device include carriers CC1, CC2 and CC3, the carrier CC3 serves as the primary carrier, the first indication information may be transmitted on the carrier CC3.

For another example, if the third indication information transmitted by the first communication device to the second communication device indicates that a carrier CC4 is the second carrier, the second communication device may transmit the first indication information on the carrier CC4, and the first communication device may monitor and receive the first indication information on the carrier CC4.

For yet another example, if the third indication information transmitted by the second communication device to the first communication device indicates that a carrier CC5 is the second carrier, the second communication device may transmit the first indication information on the carrier CC5, and the first communication device may monitor and receive the first indication information on the carrier CC5.

In an implementation, a determination method of the primary carrier is determined by at least one of:
fourth indication information transmitted by the first communication device or the second communication device, the fourth indication information being used to indicate the primary carrier;
a carrier on which direct communication request (DCR) and/or direct communication accept (DCA) information is located during a unicast link establishment process;
a carrier on which PC5 signaling (PC5-S) is located;
pre-configuration information;
network configuration information; or
carrier index information.

For example, the primary carrier may be determined based on the fourth indication information transmitted by the first communication device or the second communication device. For example, if the carrier on which the DCR information is located during the unicast link establishment process is a carrier CC1, the carrier CC1 may be determined as the primary carrier. For example, if the carrier on which the DCA information is located during the unicast link establishment process is a carrier CC2, the carrier CC2 may be determined as the primary carrier. For example, if the carrier on which PC5-S is located is a carrier CC3, the carrier CC3 may be determined as the primary carrier. For example, if the carrier index information includes a carrier CC4, the carrier CC4 may be determined as the primary carrier. For example, if the primary carrier indicated in the pre-configuration information or the network configuration information is a carrier CC5, the carrier CC5 may be determined as the primary carrier.

In an implementation, the second communication device is a network device, and the first communication device is a first terminal device. In this embodiment, the first indication information is carried in DCI, a MAC CE, or RRC signaling; the second indication information is carried in RRC signaling. For example, after transmitting the second indication information to the network device via the RRC signaling, the first terminal device may receive the first indication information from the network device via downlink control information (DCI), the MAC CE, or the RRC signaling; after receiving the first indication information, the first terminal device may activate or deactivate one or more first carriers, and then use the activated carrier to communicate with a second terminal device.

In an implementation, the first carrier includes at least one of
a carrier supported by sidelink transmission;
a carrier corresponding to a first service type; or
a carrier corresponding to a signaling type;
where the first service type is a service type corresponding to the sidelink transmission between the first communication device and the second communication device, and the signaling type includes PC5-RRC signaling, PC5-S signaling, DCR information or DCA information.

For example, the sidelink transmission between the first communication device and the second communication device supports carriers CC1, CC2 and CC3, and the first indication information may indicate that one or more of the carriers CC1, CC2 and CC3 are activated or deactivated.

For another example, the sidelink transmission between the first communication device and the second communication device corresponds to the first service type, and carriers corresponding to the service type are carriers CC4 and CC5. The first indication information may indicate whether the carriers CC4 and/or CC5 are activated or deactivated.

For yet another example, the carrier corresponding to the signaling type between the first communication device and the second communication device includes at least one of: PC5-RRC signaling corresponding to a carrier CC6, PC5-S signaling corresponding to a carrier CC7, DCR information corresponding to a carrier CC8, or DCA information corresponding to a carrier CC9. If the first indication information indicates that the carrier CC7 is activated, the second communication device may transmit PC5-S signaling via the carrier CC7, and the first communication device may monitor the PC5-S signaling on the carrier CC7. If the first indication information indicates that the carrier CC8 is activated, the second communication device may transmit DCR information via the carrier CC8, and the first communication device may monitor the DCR information on the carrier CC8.

In an implementation, the first indication information includes at least one of:
an indicator bit, used to indicate activation or deactivation;
a bitmap, used to indicate a carrier or a carrier set that needs to be activated or deactivated; or
one or more carrier indexes, used to indicate the one or more carriers that need to be activated or deactivated.

In the embodiments of the present application, the indicator bit is used to indicate activation or deactivation, which may also be understood as indicating dormancy or wake-up, or indicating activation or dormancy. In the embodiments of the present application, the meanings of activation, wake-up, and exiting dormancy are similar; the meanings of deactivation, dormancy, and not waking up are similar. For example, if the value of the indicator bit in the first indication information that indicates activation or deactivation is 1, it means that one or more sidelink carriers are activated; if the value is 0, it means that one or more sidelink carriers are deactivated. Conversely, it is also possible that the value of the indicator bit being 1 means that one or more sidelink carriers are deactivated, and the value being 0 means that one or more sidelink carriers are activated.

In the embodiments of the present application, the indicator bit, the bitmap, or the carrier index may individually indicate that one or more sidelink carriers are activated or deactivated, or a combination of the indicator bit, the bitmap, or the carrier index indicates that one or more sidelink carriers are activated or deactivated. For example, sidelink transmission supports 4 carriers CC1, CC2, CC3 and CC4; the first indication information only includes a bitmap, and the bitmap consists of 4 bits, which corresponding to the 4 carriers, respectively. If a value of the bitmap is 1110, the first three bits 111 indicate that the carriers CC1, CC2 and CC3 are in an active state, and the last bit 0 indicates that the corresponding carrier CC4 is in a dormant state. For another example, sidelink transmission supports 5 carriers CC1, CC2, CC3, CC4 and CC5; the first indication information includes an indication bit and a bitmap, and the bitmap includes 5 bits, which corresponding to the 5 carriers, respectively. If the indicator bit is 1, a value of the bitmap is 11101, indicating that the carriers CC1, CC2, CC3 and CC5 are activated. For yet another example, sidelink transmission supports 4 carriers CC1, CC2, CC3 and CC4, and the first indication information includes an indicator bit and carrier index information. If the indicator bit is 0, the carrier index information includes an index corresponding to the carrier CC1, indicating that carrier CC1 is deactivated; if the indicator bit is 0, the carrier index information includes the indexes corresponding to carriers CC1, CC2 and CC3, indicating that carriers CC1, CC2 and CC3 are deactivated.

In an implementation, the carrier or carrier set corresponding to each bit of the bitmap does not include a second carrier, where the second carrier is a carrier on which the first indication information is located. In the embodiments of the present application, each bit of the bitmap may correspond to a carrier. For example, in the bitmap of 1110, the four bits correspond to the carriers CC1, CC2, CC3 and CC4 respectively. Alternatively, each bit in the bitmap may correspond to a carrier set. These four carriers may not carry the first indication information. For another example, in the bitmap of 1110, the first bit corresponds to the carriers CC1 and CC2, the second bit corresponds to the carriers CC3 and CC4, the third bit corresponds to the carrier C5, and the fourth bit corresponds to the carrier C6. These six carriers may not carry the first indication information.

In an implementation, a correspondence relationship between the bitmap and the carrier or carrier set is determined based on pre-configuration information, network configuration information, and indication information from the first communication device or second communication device. For example, the first terminal device determines the correspondence relationship between the bitmap and the carrier or carrier set based on pre-configuration information or network configuration information from the network device. For another example, the first terminal device determines the correspondence relationship between the bitmap and the carrier or carrier set based on the indication information from the network device or the second terminal device.

In an implementation, whether one or more carriers corresponding to the one or more carrier indexes are activated or deactivated is determined based on the value of the indicator bit. For example, if the value of the indicator bit is 1, the carrier corresponding to the carrier index is activated. If the value of the indicator bit is 0, the carrier corresponding to the carrier index is deactivated.

In an implementation, a transmission resource of the first indication information is determined based on at least one of protocol predefined information, pre-configuration information, network configuration information, indication information of the first communication device, or indication information of the second communication device. For example, the first terminal device determines the transmission resource of the first indication information based on network configuration information of a network device. For another example, the first terminal device determines the transmission resource of the first indication information based on indication information of the network device or the second terminal device.

In an implementation, the transmission resource of the first indication information is determined based on at least one of:
identification information of the first communication device;
identification information of the second communication device;
carrier identification information; or
activation or deactivation information included in the first indication information;
where the carrier identification information includes identification information of the first carrier and/or identification information corresponding to a carrier on which the transmission resource of the first indication information is located.

The transmission resource of the first indication information may include time domain resource, frequency domain resource, and/or code domain resource.

For example, a resource set available for transmitting the first indication information includes K transmission resources. The index I corresponding to the transmission resource of the first indication information may be determined according to identification information ID1 of the first communication device, identification information ID2 of the second communication device, a carrier index CC_{Index} in which the transmission resource of the first indication information is located, and the value v corresponding to the indicator bit of the first indication information. For example, I = (ID1 + ID2 + CC_{Index} + v)mod K. Based on the index I, a specific transmission resource may be determined from the resource set available for transmitting the first indication information.

In an implementation, the first indication information is carried by a sequence; where the first indication information carried by a first sequence indicates to activate the first carrier; or the first indication information carried by a second sequence indicates to deactivate the first carrier. For example, the first communication device receives the first sequence from the second communication device, and the first indication information may be obtained by parsing the first sequence. For example, the first communication device may transmit the second sequence to the second communication device, and the second communication device may parse the second sequence to obtain the second indication information. The first communication device may transmit the first sequence to the first communication device based on the second indication information. The first communication device may obtain the first indication information by parsing the first sequence.

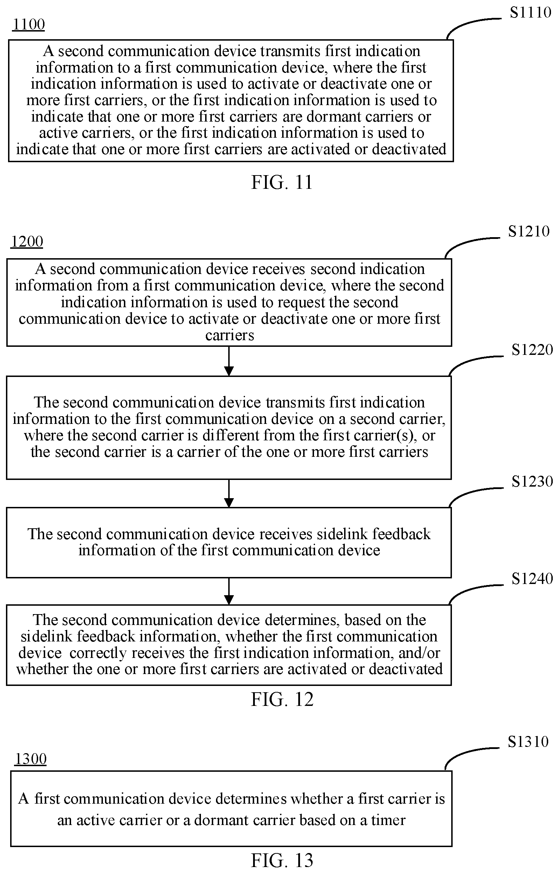

FIG. 11 is a schematic flowchart of a sidelink communication method 1100 according to an embodiment of the present application. The method may be optionally applied to the systems shown in FIGS. 1 to 7, but is not limited thereto. The method includes at least part of the following.

In S1110, a second communication device transmits first indication information to a first communication device, where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

FIG. 12 is a schematic flowchart of a sidelink communication method 1200 according to another embodiment of the present application. The method may include one or more features of the methods described above. In an implementation, the method further includes:
S1210, the second communication device receiving second indication information from the first communication device, the second indication information being used to request the second communication device to activate or deactivate the one or more first carriers.

In an implementation, the second indication information is used to indicate at least one of:
indication information for activating or deactivating the one or more first carriers; or
carrier information of the one or more first carriers.

In an implementation, the first communication device is a first terminal device, and the second communication device is a second terminal device.

In an implementation, the first indication information is carried in SCI, a sidelink reference signal, a sidelink feedback control channel (PSFCH), an MAC CE, or PC5-RRC signaling; where the sidelink reference signal carrying the first indication information includes a DMRS, a CSI-RS, or a synchronization signal.

In an implementation, S1110, the second communication device transmitting the first indication information to the first communication device, includes:
S1220, the second communication device transmitting the first indication information to the first communication device on a second carrier, where the second carrier is different from the first carrier, or the second carrier is one of the one or more first carriers.

In an implementation, in the case where the first indication information is carried in SCI or an MAC CE, the method further includes:
S1230, the second communication device receiving the sidelink feedback information from the first communication device; and
S1240, based on the sidelink feedback information, the second communication device determining whether the first communication device correctly receives the first indication information and/or whether the one or more first carriers are activated or deactivated.

In an implementation, the second carrier includes at least one of:
a carrier used by the first communication device and second communication device when performing sidelink transmission using a single carrier;
a carrier used for PC5-RRC signaling transmission; or
a carrier on which DCR information is located.

In an implementation, the second carrier is determined by at least one of:
a carrier on which DCR information and/or DCA information is located during a unicast link establishment process;
a carrier wave on which PC5-S is located;
a primary carrier; or
third indication information transmitted by the first communication device and the second communication device, the third indication information being used to indicate the second carrier.

In an implementation, the primary carrier is determined by at least one of:
fourth indication information transmitted by a first terminal or a second terminal, the fourth indication information being used to indicate the primary carrier;
a carrier on which DCR information and/or DCA information is located during a unicast link establishment process;
a carrier on which PC5-S is located;
pre-configuration information;
network configuration information; or
carrier index information.

In an implementation, the second communication device is a network device, and the first communication device is a first terminal device.

In an implementation, the first indication information is carried in DCI, a MAC CE, or RRC signaling; the second indication information is carried in the RRC signaling.

In an implementation, the carrier allowed to be activated or deactivated include at least one of:
a carrier supported by sidelink transmission;
a carrier corresponding to a first service type; or
a carrier corresponding to a signaling type;
where the first service type is a service type corresponding to the sidelink transmission between the first communication device and the second communication device, and the signaling type includes PC5-RRC signaling, PC5-S signaling, DCR information or DCA information.

In an implementation, the first indication information includes at least one of:
an indicator bit, used to indicate activation or deactivation;
a bitmap, used to indicate a carrier or a carrier set that needs to be activated or deactivated; or
one or more carrier indexes, used to indicate the one or more carriers that need to be activated or deactivated.

In an implementation, a carrier or a carrier set corresponding to each bit of the bitmap does not include the second carrier.

In an implementation, a correspondence relationship between the bitmap and the carrier or carrier set is determined based on pre-configuration information, network configuration information, and indication information of the first terminal or the second communication device.

In an implementation, whether one or more carriers corresponding to the one or more carrier indexes are activated or deactivated is determined based on a value of the indicator bit.

In an implementation, a transmission resource of the first indication information is determined based on at least one of protocol predefined information, pre-configuration information, network configuration information, indication information of the first communication device, or indication information of the second communication device.

In an implementation, the transmission resource of the first indication information is determined based on at least one of:
identification information of the first communication device;
identification information of the second communication device;
carrier identification information; or
activation or deactivation information included in the first indication information;
where the carrier identification information includes identification information of the first carrier and/or identification information corresponding to a carrier on which the transmission resource of the first indication information is located.

In an implementation, the first indication information is carried by a sequence; where the first indication information carried by a first sequence indicates to activate the first carrier; or the first indication information carried by a second sequence indicates to deactivate the first carrier.

For specific examples of the second communication device performing the sidelink communication methods 1100 and 1200 in the embodiments, reference will be made to the relevant descriptions of the second communication device in the above methods 900 and 1000, which will not be repeated here for the sake of brevity.

FIG. 13 is a schematic flowchart of a sidelink communication method 1300 according to an embodiment of the present application. The method may be optionally applied to the systems shown in FIGS. 1 to 7, but is not limited thereto. The method includes at least part of the following.

In S1310, a first communication device determines whether a first carrier is an active carrier or a dormant carrier based on timer(s).

In the embodiments of the present application, the first communication device may be a terminal device in a sidelink communication system. In the terminal device, the timer(s) may be pre-configured or configured via the network to determine whether the first carrier is the active carrier or the dormant carrier. Determining whether the first carrier is the active carrier or the dormant carrier may also be understood as activating or deactivating one or more first carriers, or determining whether one or more first carriers are activated or deactivated, or determining whether one or more first carriers are woken up, or determining whether one or more first carriers are dormant carriers. There may be one or more timers, and a duration of the timer may be set according to specific requirements. For example, the duration of the timer may be determined based on a preset value, protocol predefined information, pre-configuration information, network configuration information, or indication information from the first communication device or the second communication device. For example, in a sidelink multi-carrier system, sidelink transmission may support multiple carriers. By means of activating or deactivating the carrier based on a timer, the first communication device, such as a terminal device, may flexibly monitor the required carrier. For example, in the case where sidelink transmission does not need to be performed on multiple carriers, deactivating a carrier based on timer(s) enables the terminal device to only monitor or detect a few carriers, achieving energy saving; in the case where sidelink transmission needs to be performed on more carriers, the carrier may be activated based on timer(). The terminal device may monitor or detect more carriers, thereby improving the throughput or reliability of sidelink transmission.

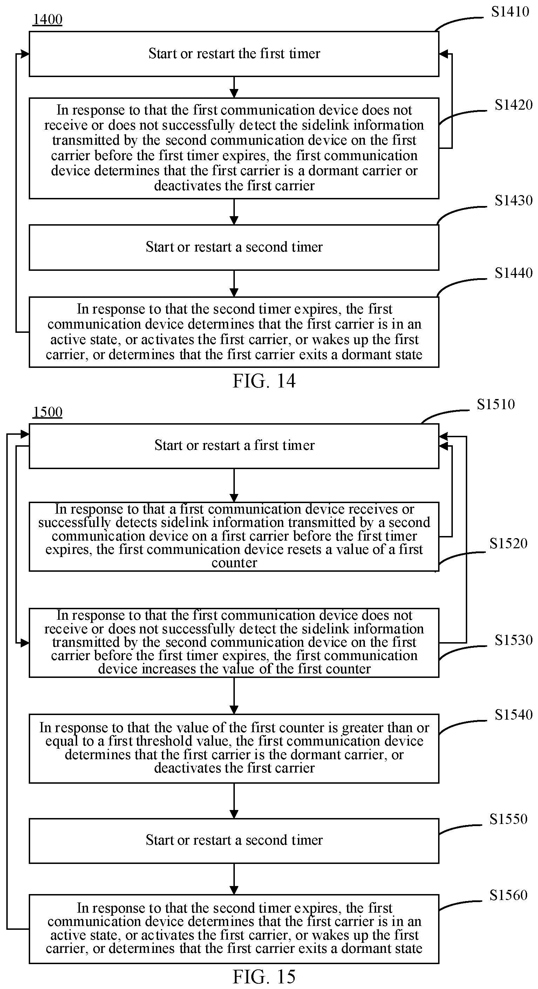

FIG. 14 is a schematic flowchart of a sidelink communication method 1400 according to another embodiment of the present application. The method may include one or more features of the method 1300 described above. In an implementation, the method 1400 further includes:
S1410, starting or restarting a first timer.

In an implementation, S1310, the first communication device determining whether the first carrier is an active carrier or a dormant carrier based on timer(s), includes:
S1420, in response to that the first communication device does not receive or does not successfully detect the sidelink information transmitted by the second communication device on the first carrier before the first timer expires, the first communication device determining that the first carrier is a dormant carrier or deactivating the first carrier.

In an implementation, the method further includes:
S1430, starting or restarting a second timer.

In an implementation, S1310, the first communication device determining whether the first carrier is an active carrier or a dormant carrier based on timer(s), further includes the following step.

In S1440, in response to that the second timer expires, the first communication device determines that the first carrier is in an active state, or activates the first carrier, or wakes up the first carrier, or determines that the first carrier exits a dormant state. Then, the first communication device begins to monitor sidelink control information transmitted by the second communication device on the first carrier, or detects sidelink information transmitted by the second communication device on the first carrier. If the sidelink communication process has not ended, it may return to perform S1410, and start a new round of cycle.

FIG. 15 is a schematic flowchart of a sidelink communication method 1500 according to another embodiment of the present application. The method may include one or more features of the method 1300 described above. In an implementation, S1310, the first communication device determining whether the first carrier is an active carrier or a dormant carrier based on timer(s), includes: the first communication device determining whether the first carrier is an active carrier or a dormant carrier based on timer(s) and a counter. In the embodiments of the present application, the counter may be used to extend the duration of the timing.

In an implementation, the method 1500 further includes the following step.

In S1510, a first timer is started or restarted. The first timer in this embodiment and the first timer in the above embodiments may be a same timer or different timers. For example, the durations of the two timers may be different; the duration of the first timer in this embodiment may be less than the duration of the first timer in the above embodiments.

In an implementation, the method 1500 further includes the following step.

In S1520, in response to that the first communication device receives or successfully detects the sidelink information transmitted by the second communication device on the first carrier before the first timer expires, a value of a first counter is reset. Then it returns to perform S1510 to restart the first timer. The first counter may be used to represent the number of consecutive expires of the first timer.

In an implementation, the method 1500 further includes the following step.

In S1530, in response to that the first communication device does not receive or does not successfully detect the sidelink information transmitted by the second communication device on the first carrier before the first timer expires, the value of the first counter is increased. Then it return to perform S1510 to restart the first timer.

In an implementation, the first communication device determining whether the first carrier is an active carrier or a dormant carrier based on timer(s) and a counter, further includes the following step.

In S1540, in response to that the value of the first counter is greater than or equal to a first threshold value, the first communication device determines that the first carrier is a dormant carrier or deactivates the first carrier. In this step, it may first be determined whether the value of the first counter is greater than or equal to the first threshold value. If yes, thenS1550 is performed after performing S1540. Otherwise, it returns to perform determining whether the first timer is failed and then perform S1520 or S1530.

For example, in the case where the duration of the first timer is T1, and the first threshold value of the first counter is n, if the first communication device does not successfully detect the sidelink information transmitted by the second communication device within the duration of T1×n, the first communication device determines that the first carrier is a dormant carrier, or deactivates the first carrier.

In an implementation, the first threshold value is determined based on protocol predefined information, pre-configuration information, network configuration information, indication information of the first communication device, or indication information of the second communication device.

In an implementation, the method 1500 further includes:
S1550, starting or restarting a second timer.

In an implementation, the first communication device determining whether the first carrier is an active carrier or a dormant carrier based on timer(s), further includes the following step.

In S1560, in response to that the second timer expires, the first communication device determines that the first carrier is in an active state, or activates the first carrier, or wakes up the first carrier, or determines that the first carrier exits a dormant state. Then, the first communication device begins to monitor the sidelink control information transmitted by the second communication device on the first carrier, or detect sidelink information transmitted by the second communication device on the first carrier. If the sidelink communication process has not ended, it may return to perform S1510 to restart the first timer, and may also reset the first counter to start a new round of cycle.

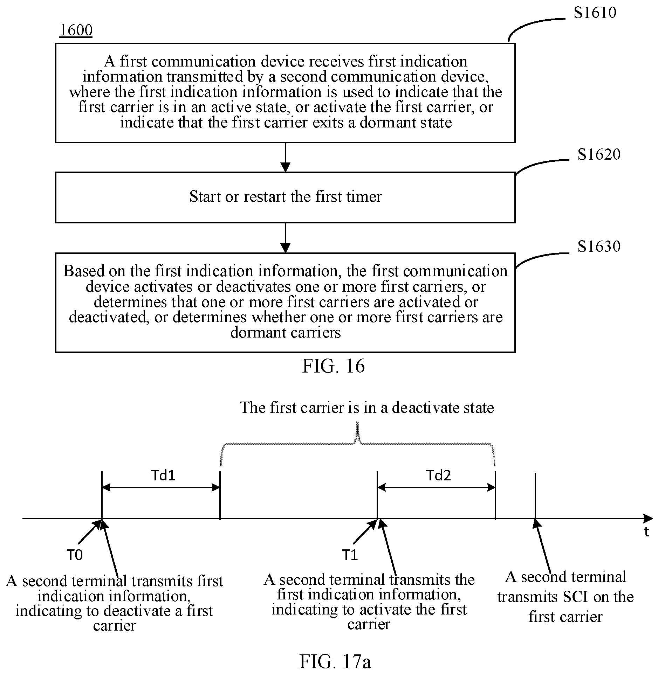

FIG. 16 is a schematic flowchart of a sidelink communication method 1600 according to another embodiment of the present application. The method may include one or more features of methods 1300, 1400, and 1500 described above. In conjunction with the method 1400 or 1500, in an implementation, the method further includes the following step.

In S1610, the first communication device receives the first indication information transmitted by the second communication device, where the first indication information is used to indicate that the first carrier is in an active state, or activate the first carrier, or wake up the first carrier, or indicate that the first carrier exits a dormant state. This step may be performed after S1410 and before the end of S1440. This step may be performed after S1510 and before the end of S1560.

In an implementation, the method further includes: S1620, starting or restarting the first timer. If the first communication device receives the first indication information while performing the method 1400 or 1500, the first communication device may perform S1620 (similar to S1410 or S1510) to restart the first timer and then perform S1420, or restart the first timer and reset the first counter and then perform S1520 or S1530 to restart a new round of cycle.

In an implementation, the first indication information is transmitted on the second carrier.

In an implementation, the first indication information is carried by at least one of: SCI (e.g., first-order SCI or second-order SCI), a sidelink reference signal, or a PSFCH. The sidelink reference signal carrying the first indication information may include a DMRS, a CSI-RS, or a synchronization signal.

In an implementation, a transmission resource of the first indication information is determined based on at least one of: protocol predefined information, pre-configuration information, network configuration information, indication information of the first communication device, or indication information of the second communication device.

In an implementation, the transmission resource of the first indication information is determined based on at least one of:
identification information of the first communication device;
identification information of the second communication device;
carrier identification information; or
activation or deactivation information included in the first indication information;
where the carrier identification information includes identification information of the first carrier and/or identification information corresponding to a carrier on which the transmission resource of the first indication information is located.

The transmission resource of the first indication information may include time domain resource, frequency domain resource, and/or code domain resource.

In an implementation, the first indication information is carried by a sequence; where the first indication information carried by a first sequence indicates to activate the first carrier; or the first indication information carried by a second sequence indicates to deactivate the first carrier.

In the embodiments of the present application, the specific explanation and examples of the first indication information may refer to the relevant descriptions in the above method embodiments, and will not be repeated here.

In an application scenario such as a sidelink multi-carrier system, in the case where the sidelink transmission does not need to be performed on multiple carriers, the terminal may only monitor a few carriers by activating or deactivating the carriers, thereby achieving energy saving.

Optionally, activation or deactivation of a sidelink carrier is applicable to a unicast or groupcast transmission manner.

### Embodiment 1: Activating or deactivating a sidelink carrier based on signaling indication

In this embodiment, the sidelink carrier being deactivated may represent that the carrier is a dormant carrier, or that a terminal does not need to perform SCI monitoring or PSCCH monitoring on the carrier, or that a terminal does not need to detect sidelink transmission on the carrier. Optionally, a carrier may be activated by indicating that the carrier is a dormant carrier. The sidelink carrier being activated may represent that the carrier is an active carrier, or that the carrier is woken up, or that the terminal needs to perform SCI monitoring or PSCCH monitoring on the carrier, or that a terminal needs to detect sidelink transmission on the carrier. Optionally, a carrier may be activated or woken up by indicating that the carrier is an active carrier.

For example, a first terminal and a second terminal are two terminals that perform sidelink transmission.

Optionally, the first terminal obtains first indication information, and determines that a first carrier is a dormant carrier based on the first indication information, or determines that the first carrier is deactivated based on the first indication information.

Optionally, the first terminal obtains the first indication information via one or more of the following manners: network indication information, or indication information of the second terminal.

Manner 1: If the first terminal obtains the first indication information through the network, the first terminal may transmit second indication information to the network, the second indication information including at least one of:
indication information for activating or deactivating a sidelink carrier; for example, the indication information includes activation indication information or deactivation indication information; or
carrier information for activating or deactivating a carrier; for example, the indication information includes third carrier information, and further, the indication information includes index information of a third carrier. Here, the third carrier and the first carrier may be the same carrier or different carriers. If the third carrier and the first carrier are the same carrier, the first terminal transmits the second indication information to the network device to request to activate or deactivate a certain carrier. The network device determines whether to activate or deactivate the carrier based on the second indication information, and transmits the first indication information to the first terminal to indicate to activate or deactivate the carrier. If the third carrier and the first carrier are different carriers, the first terminal transmits the second indication information to the network device to request to activate or deactivate a certain carrier. The network device obtains the second indication information, but the network device decides whether to activate or deactivate another carrier, and transmits the first indication information to the first terminal device to indicate to activate or deactivate the another carrier.

In this manner, the first indication information may be carried in DCI, MAC CE, or RRC signaling; the second indication information may be carried in the RRC signaling.

Manner 2: If the first terminal obtains the first indication information through a second terminal, the first terminal may transmit the second indication information to the second terminal. The second indication information may include at least one of:
indication information for activating or deactivating a sidelink carrier; for example, the indication information includes activation indication information or deactivation indication information; or
carrier information for activating or deactivating a carrier; for example, the indication information includes third carrier information, and further, the indication information includes index information of a third carrier. Here, the third carrier and the first carrier may be the same carrier or different carriers. If the third carrier and the first carrier are the same carrier, the first terminal transmits the second indication information to the second terminal to request to activate or deactivate a certain carrier. The second terminal determines to activate or deactivate the carrier based on the second indication information, and transmits the first indication information to the first terminal, indicating to activate or deactivate the carrier. If the third carrier and the first carrier are different carriers, the first terminal transmits the second indication information to the second terminal to request to activate or deactivate a certain carrier. The second terminal obtains the second indication information, but the second terminal determines whether to activate or deactivate another carrier, and transmits the first indication information to the first terminal device, indicating to activate or deactivate the other carrier.

In this manner, the first indication information may be carried in SCI (first-order SCI or second-order SCI), a MAC CE, or PC5-RRC signaling. In the case where the first indication information is carried in the SCI or the MAC CE, sidelink feedback may be activated. For example, when the second terminal transmits the first indication information to the first terminal, sidelink feedback is activated. When receiving the first indication information, the first terminal needs to transmit feedback information (ACK or NACK) to the second terminal. Based on the feedback information, the second terminal may determine whether the first terminal correctly receives the first indication information, and then determine whether the first carrier is activated or deactivated.

In this manner, the first terminal obtains the first indication information transmitted by the second terminal on the second carrier: the second carrier and the first carrier may be the same or different carriers. For example, the second carrier is a primary carrier (Pcarrier), the first carrier is a secondary carrier (Scarrier), and the second terminal transmits the first indication information on the primary carrier to activate or deactivate the secondary carrier.

Optionally, the second carrier may be a carrier used by the first terminal and the second terminal when performing sidelink transmission by using only one carrier, or a carrier used for PC5-RRC signaling transmission, or a carrier on which direct communication request (DCR) signaling is located.

Optionally, the second carrier may be determined through one or more of the following manners:
a carrier on which DCR information and/or direct communication accept (DCA) information is located during a unicast link establishment process;
a carrier on which PC5 signaling (PC5-S) is located;
a primary carrier; or
indication information transmitted by the first terminal or the second terminal, the indication information being used to indicate second carrier information. For example, the sidelink transmission system supports 4 carriers, including carriers CC1, CC2, CC3 and CC4. The first terminal and the second terminal are two terminals that perform unicast communication. After the establishment of the unicast link is completed, the first terminal transmits indication information, such as PC5-RRC signaling, to the second terminal (or the second terminal transmits indication information to the first terminal). The indication information indicates that the carrier CC1 is the second carrier, or indicates that the carrier CC1 is the primary carrier and the primary carrier is the second carrier.

Optionally, the first terminal and the second terminal determine the primary carrier of the multiple carriers through one or more of the following manners:
indication information transmitted by the first terminal or the second terminal, the indication information being used to indicate primary carrier information;
a carrier on which DCR information and/or DCA information is located during a unicast link establishment process;
a carrier on which PC5-S is located;
pre-configuration information or network configuration information; or
carrier index information.

Optionally, the multiple carriers used by the first terminal and the second terminal for sidelink transmission may be determined in the following manner: a service type or a signaling type corresponding to the sidelink transmission. For example, if the sidelink transmission is a first service type, the carriers corresponding to the sidelink transmission include the carrier 1 and carrier 2; if the sidelink transmission is a second service type, the carriers corresponding to the sidelink transmission include the carrier 1 and carrier 3; if the sidelink transmission is PC5-RRC signaling, the carriers corresponding to the sidelink transmission include carrier 1; if the sidelink transmission is PC5-S signaling, the carriers corresponding to the sidelink transmission include the carrier 2 and carrier 3.

Optionally, examples of the action taken by the first terminal after receiving the first indication information is as follows.

Example 1: If the first terminal obtains the first indication information at the time T0, and the first indication information indicates that the first carrier is a dormant carrier (or the first indication information indicates to deactivate the first carrier), the first terminal does not expect to receive SCI or PSSCH transmitted by the second terminal on the first carrier after the time T0+Td1.

If the first terminal obtains the first indication information at the time T1, and the first indication information indicates that the first carrier exits a dormant state (or the first indication information indicates to activate the first carrier), the first terminal does not expect to receive the SCI or PSSCH transmitted by the second terminal on the first carrier before the time T1+Td2, or the first terminal expects to receive the SCI or PSSCH transmitted by the second terminal on the first carrier after the time T1+Td2, or the first terminal starts monitoring the SCI or PSSCH transmitted by the second terminal or receives the PSSCH transmitted by the second terminal on the first carrier after the time T1+Td2.

The times T0 and T1 may be determined based on the start position or end position of the slot in which the first indication information is located.

As shown in FIG. 17a, the second terminal transmits the first indication information to indicate to deactivate the first carrier. After receiving the first indication information which indicates to deactivate the first carrier at the time T0, and then after a duration Td1, the first terminal deactivates the first carrier. In the case where the first carrier is in a deactivation state, the second terminal may transmit the first indication information to indicate to activate the first carrier. After receiving the first indication information which indicates to activate the first carrier at the time T1, and then after a duration Td2, the first terminal will activate the first carrier. Then, the second terminal may transmit SCI on the first carrier.

Example 2: If the first terminal obtains the first indication information at the time T0, and the first indication information indicates that the first carrier is a dormant carrier (or the first indication information indicates to deactivate the first carrier), the first terminal does not expect to receive the SCI or PSSCH transmitted by the second terminal on the first carrier after a first time T1. The first time T1 is expressed as: T1 = T2 + Td1 or T1 = T2 + Td1 + b. The second time T2 may be equal to the time T0, or may be calculated based on the time T0, for example, T2 = T0 + a. Here, a, b, and Td1 may be preset values or values determined based on pre-configuration information or network configuration information.

If the first terminal obtains the first indication information at the time T5, and the first indication information indicates that the first carrier exits a dormant state (or the first indication information indicates to activate the first carrier), the first terminal does not expect to receive the SCI or PSSCH transmitted by the second terminal on the first carrier before a third time T3, or the first terminal expects to receive the SCI or PSSCH transmitted by the second terminal on the first carrier after the third time T3, or the first terminal starts monitoring the SCI or PSSCH transmitted by the second terminal on the first carrier after the third time T3 or receives the PSSCH transmitted by the second terminal. The third time T3 is expressed as: T3 = T4 + Td2, or T3 = T4 + Td2 + d. T4 may be equal to T5, or may be calculated based on the time T5. For example, T4 = T5 + c. Here, c, d, and Td2 may be preset values or values determined based on pre-configuration information or network configuration information. The times T0 and T5 may be determined based on the start position or end position of the slot in which the first indication information is located.

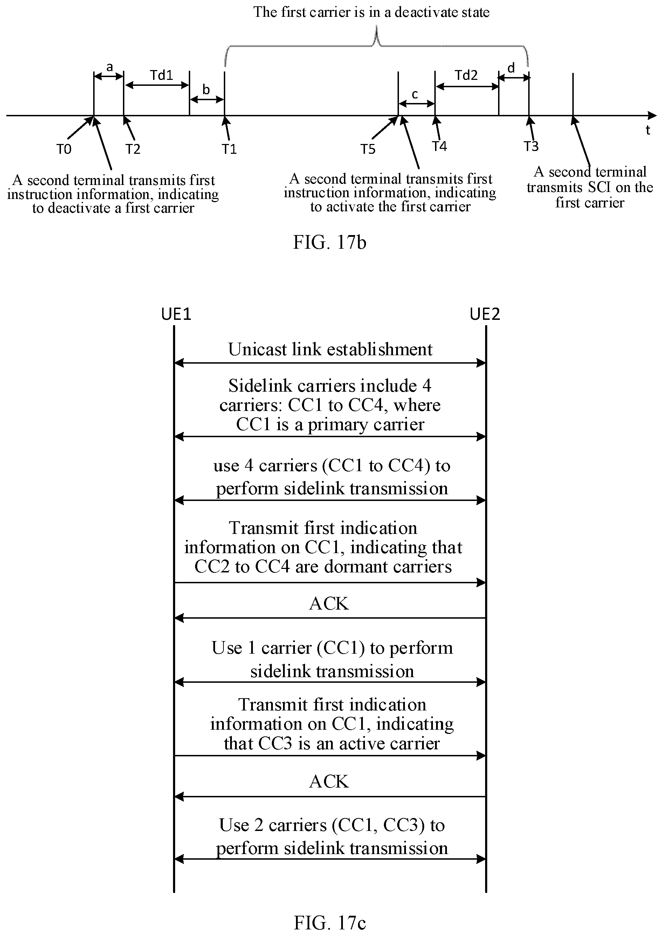

As shown in FIG. 17b, the second terminal transmits the first indication information to indicate to deactivate the first carrier. After receiving the first indication information which indicates to deactivate the first carrier at the time T0, the first terminal may deactivate the first carrier at the time T1, which is expressed as T1 = T2 + Td1 + b = T0 + a + Td1 + b. When the first carrier is in a deactivated state, the second terminal may transmit the first indication information to indicate to activate the first carrier. After receiving the first indication information which indicates to activate the first carrier at the time T5, the first terminal may activate the first carrier at the time T3, which is expressed as: T3 = T4 + Td2 + d = T5 + c + Td2 + d. Then, the second terminal may transmit SCI on the first carrier.

In the above examples, Td1 or Td2 may be determined in one or more of the following manners: protocol predefined information, pre-configuration information, network configuration information, indication information of the first terminal, indication information of the second terminal, or a processing time of a terminal.

Optionally, the following are some examples of the first indication information.

For example, the first indication information may include the following.
(1) First bit:
   a value of the first bit being 1 indicates activation or wake-up; a value of the first bit being 0 indicates deactivation or dormancy.
(2) First bitmap:
   each bit corresponds to a carrier or a carrier set; optionally, the carrier or the carrier set corresponding to each bit does not include a second carrier; optionally, a correspondence relationship between the bitmap and the carrier or the carrier set is determined based on pre-configuration information, network configuration information, indication information of the first terminal, or indication information of the second terminal.

For another example, the first indication information includes N information fields, each information field includes the following.
(1) First bit:
   a value of the first bit being 1 indicates activation or wake-up; a value of the first bit being 0 indicates deactivation or dormancy.
(2) Carrier index information: whether the carrier corresponding to the carrier index is activated or deactivated being determined according to the value of the first bit mentioned above. For example, there are a total of 8 carriers, 000 represents a carrier 1, 0001 represents to activate the carrier 1, or 1000 represents to activate the carrier 1.

For yet another example, the first indication information includes the following.
(1) First bit
   a value of the first bit being 1 indicates activation or wake-up; a value of the first bit being 0 indicates deactivation or dormancy.
(2) One or more carrier index information: whether one or more carriers corresponding to the one or more carrier indexes are activated or deactivated being determined according to the value of the first bit mentioned above.

Example 1: As shown in FIG. 17c, UE1 and UE2 are two terminals performing unicast communication, and UE1 and UE2 support multi-carrier transmission. First, UE1 and UE2 establish a unicast communication link, and UE1 and UE2 determine to use 4 carriers (i.e., carriers CC1 to CC4) to perform sidelink transmission, where CC1 is a primary carrier. In subsequent sidelink transmissions, UE1 and UE2 use the carriers CC1 to CC4 to perform sidelink transmissions. In the case where there is no sidelink data to be transmitted between UE1 and UE2, UE1 transmits first indication information to UE2, indicating that the carriers CC2, CC3 and CC4 are dormant carriers. That is, UE1 and UE2 will not the carriers use CC2, CC3, and CC4 to perform sidelink transmission, and UE1 activates sidelink feedback when transmitting the first indication information. If UE2 receives the first indication information and transmits ACK information to UE1, UE1 and UE2 only use the carrier CC1 to perform sidelink transmission; for example, UE1 and UE2 use the carrier CC1 to transmit a keep-alive signal to determine whether the current unicast link is experienced a radio link failure (RLF). In the case where there is sidelink data to be transmitted between UE1 and UE2, UE1 transmits first indication information to UE2 to indicate that the carrier CC3 exits the dormant carrier, or to indicate to activate the carrier CC3 and activate sidelink feedback. If UE2 receives the first indication information and transmits the ACK information to UE1, UE1 and UE2 may use the carriers CC1 and CC3 to perform sidelink transmission.

### Embodiment 2: Activating or deactivating a sidelink carrier based on a timer

A first terminal determines whether a first carrier is an active carrier or a dormant carrier based on a timer and a counter.

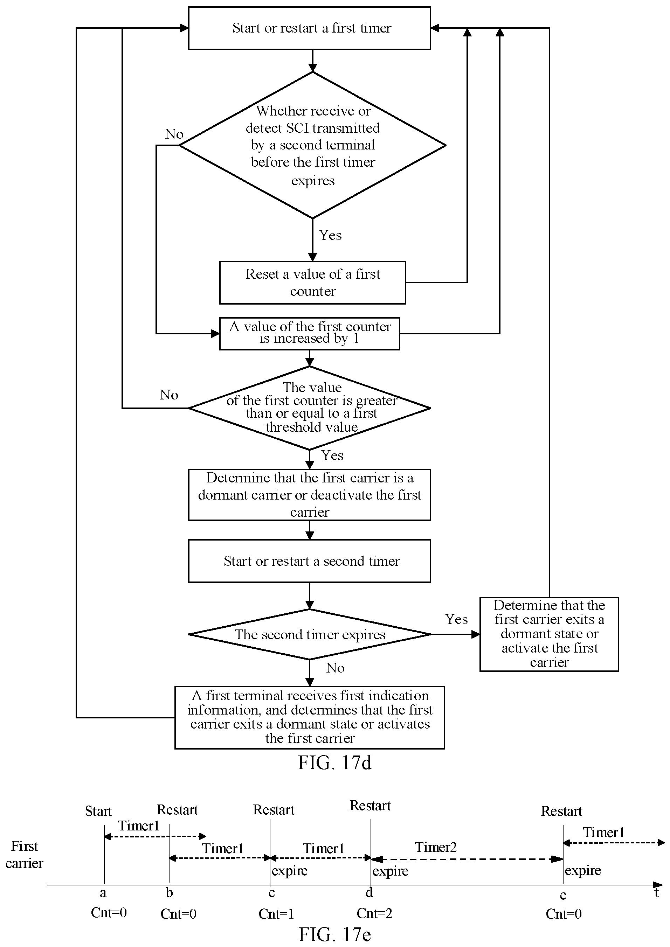

As shown in FIG. 17d, for the first carrier, a first timer may be started first.
1. If the first terminal does not receive or does not successfully detect SCI transmitted by a second terminal on the first carrier before the first timer expires (or time out), a value of a first counter is incremented by 1 and the first timer is restarted.

If the value of the first counter is greater than or equal to a first threshold value, the first terminal may determine that the first carrier is a dormant carrier or deactivate the first carrier. Optionally, the second timer is started or restarted.

The first threshold value is determined based on protocol predefined information, pre-configuration information, network configuration information, indication information of the second terminal, or indication information of the first terminal.
2. If the first terminal receives or successfully detects the SCI transmitted by the second terminal on the first carrier before the first timer expires (or time out), the value of the first counter is reset. Optionally, the first timer is restarted.
3. Optionally, if a second timer expires (or time out), the first terminal may determine whether the first carrier exits a dormant state or activate the first carrier. The first terminal may also restart the first timer.
4. Optionally, if the first terminal receives first indication information before the second timer expires (or time out), the first terminal may determine whether the first carrier exits a dormant state or determine to activate the first carrier. Then, the first terminal may also restart the first timer.

Optionally, the first terminal receives the first indication information on the second carrier.

The first indication information is carried by SCI, a MAC CE, PC5-RRC signaling, a sidelink reference signal, or carried via a PSFCH channel; where the sidelink reference signal includes a demodulation reference signal (DMRS), a channel state information reference signal (CSI-RS), or a synchronization signal.

The transmission resource of the first indication information is determined based on protocol predefined information, pre-configuration information, network configuration information, indication information of the first terminal, or indication information of the second terminal.

The transmission resource (including time domain resource, frequency domain resource, and code domain resource) of the first indication information is determined based on one or more of the following information:
identification information of the first terminal, the identification information of the first terminal being determined, for example, based on a source identification in the SCI transmitted by the first terminal to the second terminal;
identification information of the second terminal, the identification information of the second terminal being determined, for example, based on the destination identification in the SCI transmitted by the first terminal to the second terminal;
carrier identification information, such as carrier index information; or
an indication content of the first indication information; for example, the first indication information indicates to activate or deactivate the first carrier, and the first indication information is carried by a sequence. The first indication information corresponds to a first sequence when indicating to activate the first carrier; the first indication information corresponds to a second sequence when indicating to deactivate the first carrier.

Example 2: As shown in FIG. 17e, UE1 and UE2 perform unicast communication. UE1 and UE2 use one or more carriers to perform sidelink transmission. The first carrier is one of the carriers. Timer1 and Timer2 represent a first timer and a second timer, respectively. Cnt represents a first counter, and a first threshold value is 2. At a time a, the first terminal starts the first timer (Timer 1) and initializes the first counter to 0; at a time b that is before the first timer expires, the first terminal receives the SCI transmitted by the second terminal, restarts the first timer (Timer 1), and resets the value of the first counter to 0. If Timer 1 expires at time c, and the first terminal does not receive the SCI transmitted by the second terminal before this time, the value of the first counter is incremented by 1, and the first timer Timer 1 is restarted. If Timer1 expires at the time d, and the first terminal does not receive SCI transmitted by the second terminal before this time, the value of the first counter will be incremented by 1. At this time, the first counter takes a value of 2, which is equal to the first threshold value. Then, the first terminal determines that the first carrier is a dormant carrier or deactivates the first carrier, and starts the second timer Timer 2. Timer 2 expires at a time e. When Timer2 expires, the first terminal determines that the first carrier exits the dormant state or enters the active state, and restarts the first timer Timer1 and resets the first counter to 0.

In the embodiments of the present application, sidelink carriers are activated or deactivated based on the indication information or the timer, which may flexibly configure the number of carriers used for sidelink transmission, thereby reducing power consumption or improving communication throughput or reliability.

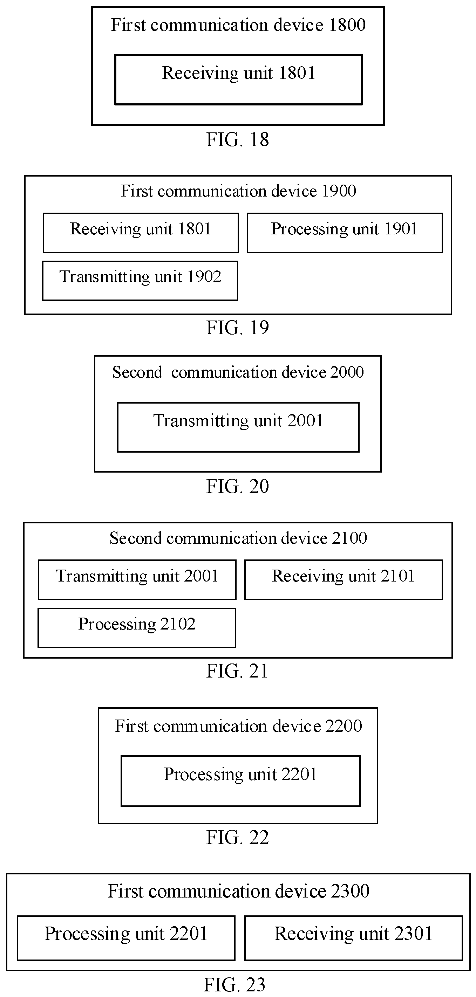

FIG. 18 is a schematic block diagram of a first communication device 1800 according to an embodiment of the present application. The first communication device 1800 may include:
a receiving unit 1801, configured to receive first indication information transmitted by a second communication device, where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

FIG. 19 is a schematic block diagram of a first communication device 1900 according to another embodiment of the present application. The device may include one or more features of the device described above. In an implementation, the device further includes:
a processing unit 1901, configured to, based on the first indication information, activate or deactivate the one or more first carriers, or determine that the one or more first carriers are activated or deactivated, or determine whether the one or more first carriers are dormant carriers.

In an implementation, based on the first indication information, the first communication device deactivating the one or more first carriers, or determining that the one or more first carriers are deactivated, or determining that the one or more first carriers are dormant carriers, includes at least one of:
the first communication device does not expect to receive sidelink information transmitted by the second communication device on a first carrier after a first time; or
the first communication device does not expect to monitor sidelink control information transmitted by the second communication device on the first carrier after the first time;
where the first time is determined based on a second time and a first duration, and the second time is determined based on a time when the first communication device receives the first indication information.

In an implementation, based on the first indication information, the first communication device activating the one or more first carriers, or determining that the one or more first carriers are not dormant carriers, includes at least one of:
the first communication device receives sidelink information transmitted by the second communication device on the first carrier after a third time;
the first communication device monitoring sidelink control information transmitted by the second communication device on the first carrier after a third time;
the first communication device does not expect to receive sidelink information transmitted by the second communication device on the first carrier before a third time; or
the first communication device does not expect to monitor sidelink control information transmitted by the second communication device on the first carrier before a third time;
where the third time is determined based on a fourth time and a second duration, and the fourth time is determined based on a time when the first communication device receives the first indication information.

In an implementation, the first duration and/or the second duration is determined based on at least one of: protocol predefined information, pre-configuration information, network configuration information, indication information of the first communication device, indication information of the second communication device, or a processing time of a terminal device.

In an implementation, as shown in FIG. 19, the device further includes:
a transmitting unit 1902, configured to transmit second indication information to the second communication device, where the second indication information is used to request the second communication device to activate or deactivate the one or more first carriers.

In an implementation, the second indication information is used to indicate at least one of:
indication information for activating or deactivating the one or more first carriers; or
carrier information of the one or more first carriers.

In an implementation, the first communication device is a first terminal device, and the second communication device is a second terminal device.

In an implementation, the first indication information is carried in sidelink control information (SCI), a sidelink reference signal, a sidelink feedback control channel (PSFCH), a media access control (MAC) control element (CE), or direct communication radio resource control (PC5-RRC) signaling; where the sidelink reference signal carrying the first indication information includes a DMRS, a CSI-RS, or a synchronization signal.

In an implementation, in the case where the first indication information is carried in the SCI or the MAC CE, the transmitting unit is further configured to:
transmit sidelink feedback information to the second communication device, the sidelink feedback information being used to indicate whether the first communication device correctly receives the first indication information, and/or whether the one or more first carriers is activated or deactivated.

In an implementation, the receiving unit is further configured to receive the first indication information transmitted by the second communication device on a second carrier; the second carrier being different from the first carrier, or the second carrier being one of the one or more first carriers.

In an implementation, the second carrier includes at least one of:
a carrier used by the first communication device and the second communication device when performing sidelink transmission using a single carrier;
a carrier used for PC5-RRC signaling transmission; or
a carrier on which DCR information is located.

In an implementation, the second carrier is determined by at least one of:
a carrier on which DCR information and/or DCA information is located during a unicast link establishment process;
a carrier on which PC5-S is located;
a primary carrier; or
third indication information transmitted by the first communication device or the second communication device, the third indication information being used to indicate the second carrier.

In an implementation, the primary carrier is determined by at least one of:
fourth indication information transmitted by the first communication device or the second communication device, the fourth indication information being used to indicate the primary carrier;
a carrier on which direct communication request (DCR) information and/or direct communication accept (DCA) information is located during a unicast link establishment process;
a carrier on which PC5 signaling PC5-S is located;
pre-configuration information;
network configuration information; or
carrier index information.

In an implementation, the second communication device is a network device, and the first communication device is a first terminal device.

In an implementation, the first indication information is carried in DCI, a MAC CE, or RRC signaling; the second indication information being carried in RRC signaling.

In an implementation, the first carrier includes at least one of:
a carrier supported by sidelink transmission;
a carrier corresponding to a first service type; or
a carrier corresponding to a signaling type;
where the first service type is a service type corresponding to the sidelink transmission between the first communication device and the second communication device, and the signaling type includes PC5-RRC signaling, PC5-S signaling, DCR information or DCA information.

In an implementation, the first indication information includes at least one of:
an indicator bit, used to indicate activation or deactivation;
a bitmap, used to indicate a carrier or a carrier set that needs to be activated or deactivated; or
one or more carrier indexes, used to indicate one or more carriers that need to be activated or deactivated.

In an implementation, the carrier or the carrier set corresponding to each bit of the bitmap does not include a second carrier.

In an implementation, a correspondence relationship between the bitmap and the carrier or carrier set is determined based on pre-configuration information, network configuration information, indication information of the first communication device, or indication information of second communication device.

In an implementation, whether one or more carriers corresponding to the one or more carrier indexes are activated or deactivated is determined based on a value of the indicator bit.

In an implementation, a transmission resource of the first indication information are determined based on at least one of protocol predefined information, pre-configuration information, network configuration information, indication information of the first communication device, or indication information of the second communication device.

In an implementation, a transmission resource of the first indication information are determined based on at least one of:
identification information of the first communication device;
identification information of the second communication device;
carrier identification information; or
activation or deactivation information included in the first indication information;
where the carrier identification information includes identification information of the first carrier and/or identification information corresponding to a carrier on which the transmission resource of the first indication information is located.

In an implementation, the first indication information is carried by a sequence; where the first indication information carried by a first sequence indicates to activate the first carrier; or the first indication information carried by a second sequence indicates to deactivate the first carrier. The first communication devices 1800 and 1900 in the embodiments of the present application may implement the corresponding functions of the first communication device in the aforementioned method embodiments. For procedures, functions, implementations and beneficial effects corresponding to various modules (e.g., sub-modules, units or components) in the first communication devices 1800 and 1900, reference will be made to the corresponding description in the above method embodiments, which will not be repeated here. It should be noted that the functions described with respect to the various modules (e.g., sub-modules, units or components) in the first communication devices 1800 and 1900 in the embodiments of the present application may be implemented by different modules (e.g., sub-modules, units or components) or implemented by a same module (e.g., sub-module, unit or component).

FIG. 20 is a schematic block diagram of a second communication device 2000 according to an embodiment of the present application. The second communication device 2000 may include:
a transmitting unit 2001, configured to transmit first indication information to a first communication device; where the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

FIG. 21 is a schematic block diagram of a second communication device 2100 according to another embodiment of the present application. The device may include one or more features of the device described above. In an implementation, the second communication device further includes:
a receiving unit 2101, configured to receive second indication information from the first communication device, the second indication information being used to request the second communication device to activate or deactivate the one or more first carriers.

In an implementation, the second indication information is used to indicate at least one of:
indication information for activating or deactivating the one or more first carriers; or
carrier information of the one or more first carriers.

In an implementation, the first communication device is a first terminal device, and the second communication device is a second terminal device.

In an implementation, the first indication information is carried in SCI, a sidelink reference signal, a sidelink feedback control channel (PSFCH), a MAC CE, or PC5-RRC signaling; where the sidelink reference signal carrying the first indication information includes a DMRS, a CSI-RS, or a synchronization signal.

In an implementation, the first indication information is carried in the SCI or the MAC CE, the device includes:
the receiving unit 2101, further configured to receive sidelink feedback information of the first communication device; and
a processing unit 2102, configured to determine, based on the sidelink feedback information, whether the first communication device correctly receives the first indication information, and/or whether the one or more first carriers are activated or deactivated.

In an implementation, the transmitting unit 2001 is further configured to transmit the first indication information to the first communication device on a second carrier, where the second carrier is different from the first carrier, or the second carrier is one of the one or more first carriers.

In an implementation, the second carrier includes at least one of:
a carrier used by the first communication device and the second communication device when performing sidelink transmission using a single carrier;
a carrier used for PC5-RRC signaling transmission; or
a carrier on which DCR information is located.

In an implementation, the second carrier is determined by at least one of:
a carrier on which the DCR information and/or DCA information are located during the unicast link establishment process;
a carrier on which PC5-S is located;
a primary carrier; or
third indication information transmitted by the first communication device and the second communication device, the third indication information being used to indicate the second carrier.

In an implementation, the primary carrier is determined by at least one of:
fourth indication information transmitted by a first terminal or a second terminal, the fourth indication information being used to indicate the primary carrier;
a carrier on which DCR information and/or DCA information is located during the unicast link establishment process;
a carrier on which PC5-S is located;
pre-configuration information;
network configuration information; or
carrier index information.

In an implementation, the second communication device is a network device, and the first communication device is a first terminal device.

In an implementation, the first indication information is carried in DCI, a MAC CE, or RRC signaling; the second indication information is carried in RRC signaling.

In an implementation, the carrier allowed to be activated or deactivated include at least one of:
a carrier supported by sidelink transmission;
a carrier corresponding to a first service type; or
a carrier corresponding to a signaling type;
where the first service type is a service type corresponding to the sidelink transmission between the first communication device and the second communication device, and the signaling type includes PC5-RRC signaling, PC5-S signaling, DCR information or DCA information.

In an implementation, the first indication information includes at least one of:
an indicator bit, used to indicate activation or deactivation;
a bitmap, used to indicate a carrier or a carrier set that needs to be activated or deactivated; or
one or more carrier indexes, used to indicate one or more carriers that need to be activated or deactivated.

In an implementation, the carrier or the carrier set corresponding to each bit of the bitmap does not include a second carrier.

In an implementation, a correspondence relationship between the bitmap and the carrier or the carrier set is determined based on pre-configuration information, network configuration information, and indication information of the first terminal or the second communication device.

In an implementation, whether one or more carriers corresponding to the one or more carrier indexes are activated or deactivated is determined based on a value of the indicator bit.

In an implementation, a transmission resource of the first indication information is determined based on at least one of: protocol predefined information, pre-configuration information, network configuration information, indication information of the first communication device, or indication information of the second communication device.

In an implementation, the transmission resource of the first indication information is determined based on at least one of:
identification information of the first communication device;
identification information of the second communication device;
carrier identification information; or
activation or deactivation information included in the first indication information;
where the carrier identification information includes identification information of the first carrier and/or identification information corresponding to a carrier on which the transmission resource of the first indication information is located.

In an implementation, the first indication information is carried by a sequence; where the first indication information carried by a first sequence indicates to activate the first carrier; or the first indication information carried by a second sequence indicates to deactivate the first carrier.

The second communication devices 2000 and 2100 in the embodiments of the present application may implement the corresponding functions of the second communication device in the aforementioned method embodiments. For procedures, functions, implementations and beneficial effects corresponding to various modules (e.g., sub-modules, units or components) in the second communication devices 2000 and 2100, the reference will be made to the corresponding description in the above method embodiments, which will not be repeated here. It should be noted that the functions described with respect to the various modules (e.g., sub-modules, units or components) in the second communication devices 2000 and 2100 in the embodiments of the present application may be implemented by different modules (e.g., sub-modules, units or components) or implemented by a same module (e.g., sub-module, unit or component).

FIG. 22 is a schematic block diagram of a first communication device 2200 according to an embodiment of the present application. The first communication device 2200 may include:
a processing unit 2201, configured to determine whether the first carrier is an active carrier or a dormant carrier based on a timer.

In an implementation, the processing unit 2201 is further configured that, in a case where sidelink information transmitted by the second communication device is not received or is not successfully detected on the first carrier before a first timer expires, the first communication device determines that the first carrier is a dormant carrier or deactivates the first carrier.

In an implementation, the device further includes a processing unit 2201, which is further configured to start or restart the second timer. For example, after determining that the first carrier is a dormant carrier, or after deactivating the first carrier, the second timer is started or restarted.

In an implementation, the processing unit 2201 is further configured to, in a case where the second timer expires, determine whether the first carrier is in an active state, or activate the first carrier, or determine that the first carrier exit a dormant state.

FIG. 23 is a schematic block diagram of a first communication device 2300 according to another embodiment of the present application. The device may include one or more features of the device described above. In an implementation, the processing unit 2201 is further configured to determine whether the first carrier is an active carrier or a dormant carrier based on a timer and a counter.

In an implementation, the processing unit 2201 is further configured to increase a value of a first counter in a case where sidelink information transmitted by the second communication device is not received or is not successfully detected on the first carrier before a first timer expires.

In an implementation, the processing unit 2201 is further configured to start or restart the first timer. For example, after increasing the value of the first counter, the first timer is started or restarted.

In an implementation, the processing unit 2201 is further configured to reset a value of a first counter in a case where sidelink information transmitted by the second communication device is received or successfully detected on the first carrier before the first timer expires.

In an implementation, the processing unit 2201 is further configured to, in a case where the value of the first counter is greater than or equal to a first threshold value, determine that the first carrier is a dormant carrier, or deactivate the first carrier.

In an implementation, the first threshold value is determined based on protocol predefined information, pre-configuration information, network configuration information, indication information of the first communication device, or indication information of the second communication device.

In an implementation, the processing unit 2201 is further configured to start or restart a second timer. For example, after determining that the first carrier is a dormant carrier or after deactivating the first carrier, the second timer is started or restarted.

In an implementation, the processing unit 2201 is further configured to, in a case where the second timer expires, determine that the first carrier is in an active state, or activate the first carrier, or determine that the first carrier exits a dormant state.

In an implementation, the processing unit 2201 is further configured to start or restart the first timer after determining that the first carrier is in an active state, or activating the first carrier, or determining that the first carrier exits a dormant state.

In an implementation, the second communication device further includes:
a receiving unit 2301, configured to receive first indication information transmitted by the second communication device, where the first indication information is used to indicate that the first carrier is in an active state, or indicate to activate the first carrier, or indicate that the first carrier exits a dormant state.

In an implementation, the processing unit 2201 is further configured to start or restart the first timer.

In an implementation, the first indication information is transmitted on a second carrier.

In an implementation, the first indication information is carried by at least one of: sidelink control information (SCI), a sidelink reference signal, and a PSFCH; where the sidelink reference signal carrying the first indication information includes a DMRS, a CSI-RS, or a synchronization signal.

In an implementation, a transmission resource of the first indication information is determined based on at least one of protocol predefined information, pre-configuration information, network configuration information, indication information of the first communication device, or indication information of the second communication device.

In an implementation, a transmission resource of the first indication information is determined based on at least one of:
identification information of the first communication device;
identification information of the second communication device;
carrier identification information; or
activation or deactivation information included in the first indication information;
where the carrier identification information includes: identification information of the first carrier, and/or identification information corresponding to a carrier on which the transmission resource of the first indication information is located.

In an implementation, the first indication information is carried by a sequence; where the first indication information carried by a first sequence indicates to activate the first carrier; or the first indication information carried by a second sequence indicates to deactivate the first carrier.

The first communication devices 2200 and 2300 in the embodiments of the present application may implement the corresponding functions of the first communication device in the aforementioned method embodiments. For procedures, functions, implementations and beneficial effects corresponding to various modules (e.g., sub-modules, units or components) in the first communication devices 2200 and 2300, reference will be made to the corresponding description in the above method embodiments, which will not be repeated here. It should be noted that the functions described with respect to the various modules (e.g., sub-modules, units or components) in the first communication devices 2200 and 2300 in the embodiments of the present application may be implemented by different modules (e.g., sub-modules, units or components) or implemented by a same module (e.g., sub-module, unit or component).

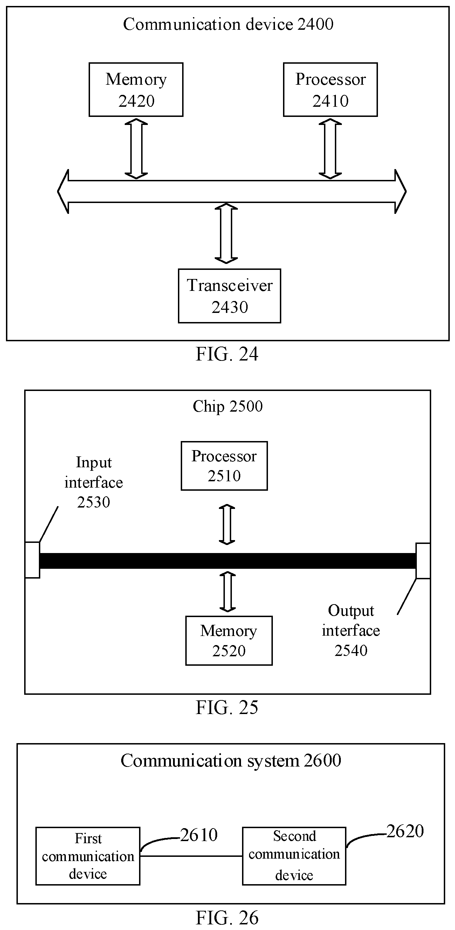

FIG. 24 is a schematic structural diagram of a communication device 2400 according to the embodiments of the present application. The communication device 2400 includes a processor 2410. The processor 2410 may call a computer program from a memory and run the computer program, to enable the communication device 2400 to implement the method in the embodiments of the present application.

In an implementation, the communication device 2400 may further include a memory 2420. The processor 2410 may call a computer program from the memory 2420 and run the computer program, to enable the communication device 2400 to implement the method in the embodiments of the present application.

The memory 2420 may be a separate device independent of the processor 2410, or may be integrated into the processor 2410.

In an implementation, the communication device 2400 may further include a transceiver 2430, and the processor 2410 may control the transceiver 2430 to communicate with other devices, and specifically, the processor 2410 may transmit information or data to other devices, or receive information or data transmitted from other devices.

The transceiver 2430 may include a transmitter and a receiver. The transceiver 2430 may further include antenna(s), and the number of antennas may be one or more.

In an implementation, the communication device 2400 may be the first communication device in the embodiments of the present application, and the communication device 2400 may implement the corresponding procedures implemented by the first communication device in various methods in the embodiments of the present application, which will not be repeated here for the sake of brevity.

In an implementation, the communication device 2400 may be a second communication device in the embodiments of the present application, and the communication device 2400 may implement the corresponding procedures implemented by the second communication device in various methods in the embodiments of the present application, which will not be repeated here for the sake of brevity.

FIG. 25 is a schematic structural diagram of a chip 2500 according to the embodiments of the present application. The chip 2500 includes a processor 2510, and the processor 2510 may call a computer program from a memory and run the computer program, to implement the method in the embodiments of the present application.

In an implementation, the chip 2500 may further include a memory 2520. The processor 2510 may call a computer program from the memory 2520 and run the computer program, to implement the method performed by the first communication device or the second communication device in the embodiments of the present application.

The memory 2520 may be a separate device independent of the processor 2510, or may be integrated into the processor 2510.

In an implementation, the chip 2500 may further include an input interface 2530. The processor 2510 may control the input interface 2530 to communicate with other devices or chips, specifically, to acquire information or data transmitted from other devices or chips.

In an implementation, the chip 2500 may further include an output interface 2540. The processor 2510 may control the output interface 2540 to communicate with other devices or chips, specifically, to output information or data to other devices or chips.

In an implementation, the chip may be applied to the first communication device in the embodiments of the present application, and the chip may implement the corresponding procedures implemented by the first communication device in various methods in the embodiments of the present application, which will not be repeated here for the sake of brevity.

In an implementation, the chip may be applied to the second communication device in the embodiments of the present application, and the chip may implement the corresponding procedures implemented by the second communication device in various methods in the embodiments of the present application, which will not be repeated here for the sake of brevity.

The chip applied to the first communication device and the chip applied to the second communication device may be the same chip or different chips.

It should be understood that the chip mentioned in the embodiments of the present application may also be called a system-level chip, a system chip, a chip system or a system-on-chip chip, etc.

The above-mentioned processor may be a general-purpose processor, a digital signal processor (DSP), a field programmable gate array (FPGA), an application specific integrated circuit (ASIC) or other programmable logic devices, transistor logic devices, and discrete hardware components, etc. The above-mentioned general-purpose processor may be a microprocessor or may be any conventional processor, etc.

The above-mentioned memory may be a volatile memory or a non-volatile memory, or may include both the volatile memory and non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above-mentioned memory is exemplary but not a limited illustration. For example, the memory in the embodiments of the present application may be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) and a direct rambus random access memory (direct rambus RAM, DR RAM), etc. That is, the memory in the embodiments of the present application is intended to include but is not limited to these and any other suitable types of memories.

FIG. 26 is a schematic block diagram of a communication system 2600 according to the embodiments of the present application. The communication system 2600 includes a first communication device 2610 and a second communication device 2620.

In an implementation, the first communication device 2610 is configured to receive first indication information transmitted by the second communication device. The first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

In an implementation, the second communication device 2620 is configured to transmit first indication information to the first communication device.

In one implementation, the first communication device determines whether the first carrier is an active carrier or a dormant carrier based on a timer.

The first communication device 2610 may be configured to implement the corresponding functions implemented by the first communication device in the above method, and the second communication device 2620 may be configured to implement the corresponding functions implemented by the second communication device in the above method, which will not be repeated here for the sake of brevity.

The above embodiments may be implemented in whole or in part by software, hardware, firmware, or any combination thereof. In the case where the above embodiments are implemented by software, they may be implemented in the form of a computer program product in whole or in part. The computer program product includes one or more computer instructions. In the case where computer program instructions are loaded and executed on a computer, processes or functions according to the embodiments of the present application are implemented in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium; for example, the computer instructions may be transmitted from a website site, computer, server, or data center to another website site, computer, server, or data center via wired (e.g., coaxial cable, optical fiber, digital subscriber line (DSL)) or wireless (e.g., infrared, wireless, microwave) means. The computer-readable storage medium may be any available medium that can be accessed by the computer, or a data storage device such as a server or a data center integrated with one or more available media. The available medium may be a magnetic medium (e.g., a floppy disk, a hard disk, a magnetic tape), an optical medium (e.g., a digital video disk (DVD)), or a semiconductor medium (e.g., a solid state disk (SSD)), etc.

It should be understood that, in the various embodiments of the present application, a size of serial numbers of the above processes does not imply an order of execution, and the execution order of the respective processes should be determined by their function and internal logic, but should not constitute any limitation on the implementation processes in the embodiments of the present application.

Those skilled in the art will clearly understand that, for the convenience and brevity of the description, for the specific working processes of the systems, apparatuses and units described above, the corresponding processes in the above method embodiments may be referred to and will not be repeated here.

The foregoing is only the specific implementation of the present application. However, the protection scope of the present application is not limited thereto. Variations or replacements apparent to those skilled in the art within the technical scope disclosed by the present application shall fall within the protection scope of the present application. Therefore, the protection scope of the present application shall be subject to the protection scope of the claims.

## Claims

1. A sidelink communication method, comprising:
a first communication device receiving first indication information transmitted by a second communication device, wherein the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

2. The method according to claim 1, the method further comprising:
based on the first indication information, the first communication device activating or deactivating the one or more first carriers, or determining that the one or more first carriers are activated or deactivated, or determining whether the one or more first carriers are dormant carriers.

3. The method according to claim 2, wherein based on the first indication information, the first communication device deactivating the one or more first carriers, or determining that one or more first carriers are deactivated, or determining whether one or more first carriers are dormant carriers, comprises at least one of:
the first communication device does not expect to receive sidelink information transmitted by the second communication device on a first carrier after a first time; or
the first communication device does not expect to monitor sidelink control information transmitted by the second communication device on a first carrier after a first time;
wherein the first time is determined based on a second time and a first duration, and the second time is determined based on a time when the first communication device receives the first indication information.

4. The method according to claim 2, wherein based on the first indication information, the first communication device activating the one or more first carriers or determining that the one or more first carriers are activated, or determining whether the one or more first carriers are dormant carriers, comprises at least one of:
the first communication device receiving sidelink information transmitted by the second communication device on a first carrier after a third time;
the first communication device monitoring sidelink control information transmitted by the second communication device on a first carrier after a third time;
the first communication device does not expect to receive sidelink information transmitted by the second communication device on a first carrier before a third time; or
the first communication device does not expect to monitor sidelink control information transmitted by the second communication device on a first carrier before a third time;
wherein the third time is determined based on a fourth time and a second duration, and the fourth time is determined based on a time when the first communication device receives the first indication information.

5. The method according to claim 3 or 4, wherein a first duration and/or a second duration is determined based on at least one of: protocol predefined information, pre-configuration information, network configuration information, indication information of the first communication device, indication information of the second communication device, and a processing time of a terminal device.

6. The method according to any one of claims 1 to 5, the method further comprising:
the first communication device transmitting second indication information to the second communication device, wherein the second indication information is used to request the second communication device to activate or deactivate the one or more first carriers.

7. The method according to claim 6, wherein the second indication information is used to indicate at least one of:
indication information for activating or deactivating the one or more first carriers; or
carrier information of the one or more first carriers.

8. The method according to any one of claims 1 to 7, wherein the first communication device is a first terminal device, and the second communication device is a second terminal device.

9. The method according to claim 8, wherein the first indication information is carried in sidelink control information (SCI), a sidelink reference signal, a sidelink feedback control channel (PSFCH), a media access control (MAC) control element (CE), or PC5 radio resource control (PC5-RRC) signaling; wherein the sidelink reference signal carrying the first indication information comprises a demodulation reference signal (DMRS), a channel state information reference signal (CSI-RS), or a synchronization signal.

10. The method according to claim 9, wherein in a case where the first indication information is carried in the SCI or the MAC CE, the method further comprising:
the first communication device transmitting sidelink feedback information to the second communication device, wherein the sidelink feedback information is used to indicate whether the first communication device correctly receives the first indication information, and/or whether the one or more first carriers are activated or deactivated.

11. The method according to any one of claims 1 to 10, wherein the first communication device receiving the first indication information transmitted by the second communication device comprises:
the first communication device receiving the first indication information transmitted by the second communication device on a second carrier, wherein the second carrier is different from the first carrier(s), or the second carrier is a carrier of the one or more first carriers.

12. The method according to claim 11, wherein the second carrier comprises at least one of:
a carrier used by the first communication device and the second communication device when performing sidelink transmission using a single carrier;
a carrier used for PC5-RRC signaling transmission; or
a carrier on which direct communication request (DCR) information is located.

13. The method according to claim 11 or 12, wherein the second carrier is determined by at least one of:
a carrier on which DCR information and/or direct communication accept (DCA) information is located during a unicast link establishment process;
a carrier on which PC5-S is located;
a primary carrier; or
third indication information transmitted by the first communication device or the second communication device, the third indication information being used to indicate the second carrier.

14. The method according to claim 13, wherein the primary carrier is determined by at least one of:
fourth indication information transmitted by the first communication device or the second communication device, the fourth indication information being used to indicate the primary carrier;
a carrier on which DCR information and/or DCA information is located during a unicast link establishment process;
a carrier on which PC5 signaling (PC5-S) is located;
pre-configuration information;
network configuration information; or
carrier index information.

15. The method according to any one of claims 1, 2, 6 or 7, wherein the second communication device is a network device, and the first communication device is a first terminal device.

16. The method according to claim 15, wherein the first indication information is carried in downlink control information (DCI), a MAC CE or RRC signaling; and the second indication information is carried in RRC signaling.

17. The method according to any one of claims 1 to 16, wherein the first carrier comprises at least one of:
a carrier supported by sidelink transmission;
a carrier corresponding to a first service type; or
a carrier corresponding to a signaling type;
wherein the first service type is a service type corresponding to the sidelink transmission between the first communication device and the second communication device, and the signaling type comprises PC5-RRC signaling, PC5-S signaling, DCR information, or DCA information.

18. The method according to any one of claims 1 to 17, wherein the first indication information comprises at least one of:
an indicator bit, used to indicate activation or deactivation;
a bitmap, used to indicate a carrier or a carrier set that needs to be activated or deactivated;
one or more carrier indexes, used to indicate the one or more carriers that need to be activated or deactivated.

19. The method according to claim 18, wherein a carrier or a carrier set corresponding to each bit of the bitmap comprise no second carrier.

20. The method according to claim 18 or 19, wherein a correspondence relationship between the bitmap and the carrier or carrier set is determined based on pre-configuration information, network configuration information, indication information of the first communication device, or indication information of the second communication device.

21. The method according to any one of claims 18 to 20, wherein whether the one or more carriers corresponding to the one or more carrier indexes are activated or deactivated is determined according to a value of the indicator bit.

22. The method according to any one of claims 1 to 21, wherein a transmission resource of the first indication information is determined based on at least one of: protocol predefined information, pre-configuration information, network configuration information, indication information of the first communication device, or indication information of the second communication device.

23. The method according to any one of claims 1 to 22, wherein a transmission resource of the first indication information is determined based on at least one of:
identification information of the first communication device;
identification information of the second communication device;
carrier identification information; or
activation or deactivation information comprised in the first indication information;
wherein the carrier identification information comprises identification information of a first carrier and/or identification information corresponding to a carrier on which the transmission resource of the first indication information is located.

24. The method according to any one of claims 1 to 23, wherein the first indication information is carried by a sequence; wherein the first indication information carried by a first sequence indicates to activate a first carrier; or the first indication information carried by a second sequence indicates to deactivate a first carrier.

25. A sidelink communication method, comprising:
a second communication device transmitting first indication information to a first communication device, wherein the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) are carrier(s) used for sidelink transmission.

26. The method according to claim 25, the method further comprising:
the second communication device receiving second indication information from the first communication device, wherein the second indication information is used to request the second communication device to activate or deactivate the one or more first carriers.

27. The method according to claim 26, wherein the second indication information is used to indicate at least one of:
indication information for activating or deactivating the one or more first carriers; or
carrier information of the one or more first carriers.

28. The method according to any one of claims 25 to 27, wherein the first communication device is a first terminal device, and the second communication device is a second terminal device.

29. The method according to claim 28, wherein the first indication information is carried in sidelink control information (SCI), a sidelink reference signal, a sidelink feedback control channel (PSFCH), a media access control (MAC) control element (CE), or PC5 radio resource control (PC5-RRC) signaling; wherein the sidelink reference signal carrying the first indication information comprises a demodulation reference signal (DMRS), a channel state information reference signal (CSI-RS), or a synchronization signal.

30. The method according to claim 29, wherein in a case where the first indication information is carried in the SCI or the MAC CE, the method further comprising:
the second communication device receiving sidelink feedback information of the first communication device; and
based on the sidelink feedback information, the second communication device determining whether the first communication device correctly receives the first indication information, and/or whether the one or more first carriers are activated or deactivated.

31. The method according to any one of claims 25 to 30, wherein the second communication device transmitting the first indication information to the first communication device, comprises:
the second communication device transmitting the first indication information to the first communication device on a second carrier, wherein the second carrier is different from the first carrier(s), or the second carrier is a carrier of the one or more first carriers.

32. The method according to claim 31, wherein the second carrier comprises at least one of:
a carrier used by the first communication device and the second communication device when performing sidelink transmission using a single carrier;
a carrier used for PC5-RRC signaling transmission; or
a carrier on which DCR information is located.

33. The method according to claim 31 or 32, wherein the second carrier is determined by at least one of:
a carrier on which DCR information and/or DCA information is located during a unicast link establishment process;
a carrier on which PC5-S is located;
a primary carrier; or
third indication information transmitted by the first communication device and the second communication device, the third indication information being used to indicate the second carrier.

34. The method according to claim 33, wherein the primary carrier is determined by at least one of:
fourth indication information transmitted by a first terminal or a second terminal, the fourth indication information being used to indicate the primary carrier;
a carrier on which DCR information and/or DCA information is located during a unicast link establishment process;
a carrier on which PC5 signaling (PC5-S) is located;
pre-configuration information;
network configuration information; or
carrier index information.

35. The method according to any one of claims 25 to 27, wherein the second communication device is a network device, and the first communication device is a first terminal device.

36. The method according to claim 35, wherein the first indication information is carried in downlink control information (DCI), a MAC CE or RRC signaling; and the second indication information is carried in RRC signaling.

37. The method according to any one of claims 25 to 36, wherein a carrier allowed to be activated or deactivated comprises at least one of:
a carrier supported by sidelink transmission;
a carrier corresponding to a first service type; or
a carrier corresponding to a signaling type;
wherein the first service type is a service type corresponding to sidelink transmission between the first communication device and the second communication device, and the signaling type comprises PC5-RRC signaling, PC5-S signaling, DCR information or DCA information.

38. The method according to any one of claims 25 to 37, wherein the first indication information comprises at least one of:
an indicator bit, used to indicate activation or deactivation;
a bitmap, used to indicate a carrier or a carrier set that needs to be activated or deactivated; or
one or more carrier indexes, used to indicate one the or more carriers that need to be activated or deactivated.

39. The method according to claim 38, wherein a carrier or a carrier set corresponding to each bit of the bitmap comprise no second carrier.

40. The method according to claim 38 or 39, wherein a correspondence relationship between the bitmap and the carrier or carrier set is determined based on pre-configuration information, network configuration information, indication information of a first terminal, or indication information of the second communication device.

41. The method according to any one of claims 38 to 40, wherein whether the one or more carriers corresponding to the one or more carrier indexes are activated or deactivated is determined according to a value of the indicator bit.

42. The method according to any one of claims 25 to 41, wherein a transmission resource of the first indication information is determined based on at least one of protocol predefined information, pre-configuration information, network configuration information, indication information of the first communication device, or indication information of the second communication device.

43. The method according to any one of claims 25 to 42, wherein a transmission resource of the first indication information is determined based on at least one of:
identification information of the first communication device;
identification information of the second communication device;
carrier identification information; or
activation or deactivation information comprised in the first indication information;
wherein the carrier identification information comprises identification information of a first carrier and/or identification information corresponding to a carrier on which the transmission resource of the first indication information is located.

44. The method according to any one of claims 25 to 43, wherein the first indication information is carried by a sequence; wherein the first indication information carried by a first sequence indicates to activate a first carrier; or the first indication information carried by a second sequence indicates to deactivate a first carrier.

45. A sidelink communication method, comprising:
a first communication device determining whether a first carrier is an active carrier or a dormant carrier based on a timer.

46. The method according to claim 45, wherein the first communication device determining whether the first carrier is the active carrier or the dormant carrier based on the timer, comprises:
in response to that the first communication device does not receive or does not successfully detect sidelink information transmitted by a second communication device on the first carrier before a first timer expires, the first communication device determining that the first carrier is the dormant carrier, or deactivating the first carrier.

47. The method according to claim 45, wherein the first communication device determining whether the first carrier is the active carrier or the dormant carrier based on the timer, comprises:
the first communication device determining whether the first carrier is the active carrier or the dormant carrier based on the timer and a counter.

48. The method according to claim 47, the method further comprising:
the first communication device increasing a value of a first counter in response to that the first communication device does not receive or does not successfully detect sidelink information transmitted by a second communication device on the first carrier before a first timer expires.

49. The method according to claim 48, the method further comprising: starting or restarting the first timer.

50. The method according to claim 48 or 49, wherein the first communication device determining whether the first carrier is the active carrier or the dormant carrier based on the timer and the counter, further comprises:
in response to that the value of the first counter is greater than or equal to a first threshold value, the first communication device determining that the first carrier is the dormant carrier, or deactivating the first carrier.

51. The method according to claim 50, wherein the first threshold value is determined based on protocol predefined information, pre-configuration information, network configuration information, indication information of the first communication device, or indication information of the second communication device.

52. The method according to claim 46, 50 or 51, the method further comprising:
starting or restarting a second timer.

53. The method according to claim 52, wherein the first communication device determining whether the first carrier is the active carrier or the dormant carrier based on the timer, further comprises:
in response to that the second timer expires, the first communication device determining that the first carrier is in an active state, or activating the first carrier, or determining that the first carrier exits a dormant state.

54. The method according to claim 53, the method further comprising:
starting or restarting the first timer.

55. The method according to claim 52, the method further comprising:
the first communication device receiving first indication information transmitted by the second communication device, wherein the first indication information is used to indicate that the first carrier is in an active state, or indicate to activate the first carrier, or indicate that the first carrier exits a dormant state.

56. The method according to claim 52, the method further comprising: starting or restarting the first timer.

57. The method according to claim 55 or 56, wherein the first indication information is transmitted on a second carrier.

58. The method according to any one of claims 55 to 57, wherein the first indication information is carried by at least one of: sidelink control information (SCI), a sidelink reference signal, or a sidelink feedback control channel (PSFCH); wherein the sidelink reference signal carrying the first indication information comprises a demodulation reference signal (DMRS), a channel state information reference signal (CSI-RS), or a synchronization signal.

59. The method according to any one of claims 55 to 58, wherein a transmission resource of the first indication information is determined based on at least one of protocol predefined information, pre-configuration information, network configuration information, indication information of the first communication device, or indication information of the second communication device.

60. The method according to any one of claims 55 to 59, wherein a transmission resource of the first indication information is determined based on at least one of:
identification information of the first communication device;
identification information of the second communication device;
carrier identification information; or
activation or deactivation information comprised in the first indication information;
wherein the carrier identification information comprises identification information of the first carrier and/or identification information corresponding to a carrier on which the transmission resource of the first indication information is located.

61. The method according to any one of claims 55 to 60, wherein the first indication information is carried by a sequence; wherein the first indication information carried by a first sequence indicates to activate the first carrier; or the first indication information carried by a second sequence indicates to deactivate the first carrier.

62. The method according to any one of claims 46, 48 to 61, the method further comprising:
the first communication device resetting a value of a first counter in response to that the first communication device receives or successfully detects the sidelink information transmitted by the second communication device on the first carrier before the first timer expires.

63. A first communication device, comprising:
a receiving unit, configured to receive first indication information transmitted by a second communication device, wherein the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

64. A second communication device, comprising:
a transmitting unit, configured to transmit first indication information to a first communication device, wherein the first indication information is used to activate or deactivate one or more first carriers, or the first indication information is used to indicate that one or more first carriers are dormant carriers or active carriers, or the first indication information is used to indicate that one or more first carriers are activated or deactivated; the first carrier(s) being carrier(s) used for sidelink transmission.

65. A first communication device, comprising:
a processing unit, configured to determine whether a first carrier is an active carrier or a dormant carrier based on a timer.

66. A communication device, comprising: a transceiver, a processor, and a memory, wherein the memory is configured to store a computer program, the transceiver is configured to communicate with another device, and the processor is configured to call the computer program stored in the memory and run the computer program, to enable the communication device to perform the method according to any one of claims 1 to 24, the method according to any one of claims 25 to 44, or the method according to any one of claims 45 to 62.

67. A chip, comprising: a processor, configured to call a computer program from a memory and run the computer program, to enable a device equipped with the chip to perform the method according to any one of claims 1 to 24, the method according to any one of claims 25 to 44, or the method according to any one of claims 45 to 62.

68. A computer-readable storage medium, configured to store a computer program, wherein the computer program, when executed by a device, enables the device to perform the method according to any one of claims 1 to 24, the method according to any one of claims 25 to 44, or the method according to any one of claims 45 to 62.

69. A computer program product, comprising computer program instructions, wherein the computer program instructions enable a computer to perform the method according to any one of claims 1 to 24, the method according to any one of claims 25 to 44, or the method according to any one of claims 45 to 62.

70. A computer program, wherein the computer program enables a computer to perform the method according to any one of claims 1 to 24, the method according to any one of claims 25 to 44, or the method according to any one of claims 45 to 62.
